# EUROPÄISCHE PATENTSCHRIFT

(11) **EP 3 804 945 B1**
(45) Veröffentlichungstag und Bekanntmachung des Hinweises auf die Patenterteilung: **20.04.2022**
(21) Anmeldenummer: 20200660.7
(22) Anmeldetag: 08.10.2020
(51) Int. Cl.: B29C 45/14, B29C 45/76, B29C 45/84, B29C 33/12

(54) **WERKZEUGHÄLFTE UND VERFAHREN ZUM HERSTELLEN EINES SPRITZGUSSTEILS MIT WENIGSTENS EINEM BOLZENARTIGEN EINLEGETEIL**
TOOL HALF AND METHOD FOR MANUFACTURING AN INJECTION MOULDED PART WITH AT LEAST ONE PIN-SHAPED INSERT
MOITIÉ D'OUTIL ET PROCÉDÉ DE FABRICATION D'UNE PIÈCE MOULÉE PAR INJECTION POURVUE D'AU MOINS UN INSERT DE TYPE BOULON

(30) Priorität: 08.10.2019 DE 102019126939
(43) Veröffentlichungstag der Anmeldung: 14.04.2021
(73) Patentinhaber: Lisa Dräxlmaier GmbH, 84137 Vilsbiburg (DE)
(72) Erfinder: Esterbauer, Peter, 5282 Ranshofen (AT); Püschel, Stefan, 4982 Obernberg/Inn (AT); Peterlechner, Hermann, 5145 Neukirchen (AT); Greifeneder, Daniel, 4963 St. Peter am Hart (AT); Liedtke, Rainer, 5280 Braunau/Inn (AT)

(56) Entgegenhaltungen:
- CH-A5- 634 505
- DD-A1- 251 103
- DE-A1- 3 135 259
- DE-A1- 10 322 622
- DE-A1-102011 120 403
- DE-A1-102015 114 270
- DE-U- 7 417 692
- US-A- 3 303 256
- US-A- 4 443 173

## Beschreibung

### Technisches Gebiet

Die vorliegende Erfindung betrifft eine Werkzeughälfte und ein Verfahren zum Herstellen eines Spritzgussteils mit wenigstens einem bolzenartigen Einlegeteil.

### Stand der Technik

Es ist an sich bekannt, bei Spritzgussteilen Einlegeteile, beispielsweise in Form von Schrauben, Bolzen, Stiften, Passstiften und dergleichen zu integrieren. Dafür werden solche Einlegeteile im Bereich einer Kavität eines Spritzgusswerkzeugs angeordnet und mit einem Kunststoff zumindest teilweise umspritzt. Das Handling und die Positionierung solcher Einlegeteile im Bereich einer Kavität eines Spritzgusswerkzeugs kann sich mitunter relativ aufwendig gestalten. Dies kann mit einer aufwendigen und kostenintensiven Peripherie, langen Zykluszeiten und einem relativ hohen Platzbedarf bei einer Spritzgussmaschine miteinhergehen.

Die DE 74 17 692 U beschreibt eine Werkzeughälfte gemäß dem Oberbegriff des Anspruchs 1.

### Beschreibung der Erfindung

Es ist daher die Aufgabe der vorliegenden Erfindung, eine Lösung bereitzustellen, mittels welcher ein Spritzgussteil mit wenigstens einem integrierten bolzenartigen Einlegeteil besonders einfach hergestellt werden kann.

Diese Aufgabe wird durch eine Werkzeughälfte für eine Spritzgussmaschine sowie durch ein Verfahren zum Herstellen eines Spritzgussteils mit den Merkmalen der unabhängigen

Ansprüche gelöst. Weitere mögliche Ausgestaltungen der Erfindung sind insbesondere in den abhängigen Ansprüchen angegeben.

Die erfindungsgemäße Werkzeughälfte für eine Spritzgussmaschine zum Herstellen eines Spritzgussteils mit wenigstens einem bolzenartigen Einlegeteil umfasst einen Formbereich, der zumindest einen Teil einer Kavität für das Spritzgussteil bildet. Des Weiteren umfasst die Werkzeughälfte einen sich im Inneren der Werkzeughälfte und durch den Formbereich hindurch ersteckenden Beförderungskanal. Zudem umfasst die Werkzeughälfte ein zum Zuführen des Einlegeteils in die Werkzeughälfte ausgelegten Zuführkanal, der sich in vertikaler Richtung durch die Werkzeughälfte erstreckt und in einen Aufnahmebereich des Beförderungskanals mündet. Zudem weist die Werkzeughälfte eine Positioniereinheit auf, die dazu ausgelegt ist, durch eine Bewegung von einer Entformposition in eine Spritzposition einen Schaft des Einlegeteils zu umschließen und dadurch das Einlegeteil aufzunehmen, wenn dieses im Aufnahmebereich des Beförderungskanals angeordnet ist, und das aufgenommene Einlegeteil vom Aufnahmebereich zu einer Spritzgussposition im Bereich des Formbereichs zu befördern.

Die erfindungsgemäße Werkzeughälfte umfasst also eine Art integrierte Zuführmechanik, um wenigstens ein bolzenartiges Einlegeteil im Bereich einer Kavität in einer vorgegebenen Spritzgussposition anzuordnen, sodass das Einlegeteil durch Schließen eines Spritzgusswerkzeugs, welches die erfindungsgemäße Werkzeughälfte umfasst, umspritzen kann. Bei dem Formbereich kann es sich um ein separates Bauteil, z.B. einen Formeinsatz, handeln, es ist aber genauso gut möglich, dass der Formbereich kein separates Bauteil ist, sondern z.B. in eine Formplatte eingearbeitet ist. Der Formbereich weist eine oder mehrere Vertiefungen auf, welche eine Negativform für das Spritzgussteil bilden.

Unter bolzenartigem Einlegeteil ist zu verstehen, dass das Einlegeteil zumindest einen Schaft aufweist, welcher einen runden oder auch beispielsweise einen eckigen Querschnitt aufweisen kann. Bei dem bolzenartigen Einlegeteil kann es sich beispielsweise um eine Schraube, einen Bolzen, einen Stift, einen Passstift oder dergleichen handeln. Mittels der erfindungsgemäßen Werkzeughälfte ist es also möglich, ein solches bolzenartiges Einlegeteil auf ganz einfache Weise im Bereich der Kavität der Werkzeughälfte zu positionieren.

Durch den Zuführkanal ist es möglich, das bolzenartige Einlegeteil ins Innere der Werkzeughälfte zuzuführen. Dadurch, dass sich der Zuführkanal in vertikaler Richtung durch die Werkzeughälfte erstreckt, sind keine Fördermittel oder dergleichen erforderlich, um das Einlegeteil im Inneren der Werkzeughälfte bis zum Beförderungskanal fortzubewegen. Der Zuführkanal kann auch schräg verlaufen, muss also nicht rein in vertikaler Richtung verlaufen. Wesentlich beim Zuführkanal ist jedoch, dass dieser so verläuft, dass das bolzenartige Einlegeteil rein schwerkraftbedingt durch den Zuführkanal zum Aufnahmebereich des Beförderungskanals gelangen kann.

Mittels der Positioniereinheit ist es möglich, das im Aufnahmebereich angeordnete bolzenartige Einlegeteil bis zur Spritzgussposition im Bereich des Formbereichs, also im Bereich der Kavität, zu befördern. Dafür kann die Positioniereinheit zwischen der besagten Entformposition und der besagten Spritzgussposition insbesondere translatorisch hin und her bewegt werden. Die Positioniereinheit ist dabei so gestaltet, dass sie den Schaft des Einlegeteils umschließen und dadurch das Einlegeteil aufnehmen kann, wenn das Einlegeteil im Aufnahmebereich des Beförderungskanals angeordnet ist. Nachdem das Einlegeteil im Aufnahmebereich des Beförderungskanals angekommen ist, muss die Positioniereinheit also nur von der Entformposition in die Spritzposition bewegt werden, in Folge dessen die Positioniereinheit unter anderem auch den Aufnahmebereich des Beförderungskanals passiert, wo die Positioniereinheit den Schaft des Einlegeteils umschließt und dieses dadurch ergreift beziehungsweise aufnimmt. Durch weitere Fortbewegung der Positioniereinheit bis zur Spritzposition kann das Einlegeteil in seine Spritzgussposition im Bereich des Formbereichs befördert werden.

Bei der erfindungsgemäßen Werkzeughälfte ist es also nicht mehr erforderlich, eine kostenintensive Peripherie vorzusehen, um das bolzenartige Einlegeteil in seiner Spritzgussposition im Bereich des Formbereichs anzuordnen. Durch die Integration der Positioniereinheit in die Werkzeughälfte ergibt sich eine besonders platzsparende Zuführmechanik, mittels welcher das bolzenartige Einlegeteil im Inneren der Werkzeughälfte bis zur Spritzgussposition im Bereich des Formbereichs befördert werden kann. Bei der erfindungsgemäßen Werkzeughälfte ist es mit sehr kurzen Zykluszeiten möglich, das besagte Spritzgussteil mit dem integrierten Einlegeteil herzustellen.

Zudem ist es mittels der erfindungsgemäßen Werkzeughälfte auch möglich, Spritzgussteile herzustellen, bei welchen das bolzenartige Einlegeteil nicht mit umspritzt wird. Die Positioniereinheit kann beispielsweise so gestaltet sein, dass mittels dieser der Formbereich bei Bedarf - also wenn kein Einlegeteil mit umspritzt werden soll - dicht abgeschlossen werden kann. So ist es möglich, mittels der Werkzeughälfte auch Spritzgussteile herzustellen, bei denen kein Einlegeteil mit umspritzt werden soll.

Durch die integrierte Positioniereinheit ist es darüber hinaus möglich, derartige bolzenartige Einlegeteile besonders zuverlässig immer wieder passgenau an der besagten Spritzgussposition im Bereich des Formbereichs zu positionieren. Es sind beispielsweise keine Handlingroboter oder dergleichen notwendig, um das bolzenartige Einlegeteil in der Spritzgussposition im Bereich des Formbereichs anzuordnen.

Eine Steuerung und Überwachung sämtlicher Funktionen der Werkzeughälfte und auch der Spritzgussmaschine kann von der Werkzeughälfte selbst übernommen werden. Zudem ist es möglich, eine Bestückung mit einer Vielzahl solcher bolzenartiger Einlegeteile zum Beispiel in Nebenzeiten der Spritzgussmaschine vorzunehmen. Eine Zuführung und Bereitstellung der bolzenartigen Einlegeteile kann auf unterschiedlichste Weise erfolgen. Beispielsweise ist es möglich, ein Stangenmagazin oder auch ein Trommelmagazin vorzusehen, welches an den Zuführkanal angeschlossen werden kann. Die Anordnung solcher Magazine kann beispielsweise oben an der Werkzeughälfte oder auch seitlich erfolgen. Auch kann beispielsweise eine pneumatische Zuführeinheit verwendet werden, welche zum Beispiel über einen Schlauch direkt mit der Werkzeughälfte und somit mit Zuführkanal verbunden ist.

Erfindungsgemäß weist die Werkzeughälfte einen Kernzug zum Bewegen der Positioniereinheit zwischen der Entformposition und der Spritzposition auf. Die Positioniereinheit weist zudem eine im Beförderungskanal angeordnete und mit dem Kernzug verbundene Positionierhülse auf. Beim Bewegen der Positioniereinheit von der Entformposition in die Spritzposition wird die Positionierhülse innerhalb des Beförderungskanals in Richtung des Formbereichs bewegt. Auf dem Weg von der Entformposition in die Spritzposition passiert die Positionierhülse den Aufnahmebereich, und kann dadurch den Schaft des Einlegeteils umschließen und aufnehmen, wenn das Einlegeteil im Aufnahmebereich angeordnet ist. Durch weitere Bewegung der Positioniereinheit über den Aufnahmebereich hinaus bis zur Entformposition kann das aufgenommene Einlegeteil in die Spritzgussposition befördert werden. Es ist beispielsweise auch möglich, mehrere solcher Positionierhülsen an dem Kernzug vorzusehen. Mittels der besagten Positionierhülse ist es auf einfache und zuverlässige Weise möglich, den Schaft des Einlegeteils zu umschließen, wenn das Einlegeteil im Aufnahmebereich des Beförderungskanals angeordnet ist. Durch eine translatorische Bewegung der Positionierhülse in Richtung des Formbereichs wird der Schaft des Einlegeteils stirnseitig von der Positionierhülse umschlossen, wenn diese den Aufnahmebereich passiert. Durch weitere Bewegung der Positionierhülse in Richtung der Kavität kann das Einlegeteil dann bis zur Spritzgussposition befördert werden.

Eine weitere mögliche Ausgestaltung der Erfindung sieht vor, dass die Positionierhülse einen Magnet zum Fixieren des mittels der Positionierhülse umschlossenen Schafts des Einlegeteils aufweist. Dadurch kann nach dem Umschließen des Schafts des Einlegeteils auf zuverlässige Weise sichergestellt werden, dass das einmal mittels der Positionierhülse aufgenommene Einlegeteil auch sicher mittels der Positionierhülse gehalten werden kann, insbesondere bis das Einlegeteil unter Vermittlung der Positionierhülse und der Positioniereinheit in die Spritzgussposition befördert wurde.

Erfindungsgemäß ist eine Aufnahmeeinrichtung in axialer Richtung relativbeweglich zur Positionierhülse angeordnet. In der Entformposition der Positioniereinheit ist die Aufnahmeeinrichtung unterhalb vom Zuführkanal im Aufnahmebereich angeordnet, sodass das schwerkraftbedingt durch den Zuführkanal in den Aufnahmebereich gelangende Einlegeteil in die Aufnahmeeinrichtung fällt. Beim Bewegen der Positioniereinheit von der Entformposition in die Spritzposition wird die Positionierhülse relativ zur Aufnahmeeinrichtung verschoben und der Schaft des in der Aufnahmeeinrichtung angeordneten Einlegeteils wird von der Positionierhülse umschlossen und anschließend wird das gesamte Einlegteil in die Spritzgussposition befördert. Mittels der Aufnahmeeinrichtung ist es möglich, das Einlegeteil im Aufnahmebereich zuverlässig aufzunehmen und zu fixieren. Durch die Relativbeweglichkeit der Aufnahmeeinrichtung zur Positionierhülse ist es wiederum möglich, dass die Positionierhülse das in der Aufnahmeeinrichtung aufgenommene Einlegeteil ganz einfach aufnehmen kann, indem die sich Positionierhülse über den Schaft des Einlegeteils stülpt. Die Aufnahmeeinrichtung kann währenddessen dafür sorgen, dass das Einlegeteil nicht verschoben wird, und zwar so lange, bis der Schaft des Einlegteils mittels der Positionierhülse umschlossen und somit aufgenommen wurde. Die Aufnahmeeinrichtung und die Positionierhülse sind so aufeinander abgestimmt, dass beim Bewegen der Positioniereinheit von der Entformposition in die Spritzposition die Positionierhülse relativ zur Aufnahmeeinrichtung verschoben wird, sodass die Aufnahmeeinrichtung die Bewegung des mittels der Positionierhülse aufgenommenen Einlegeteils in Richtung des Formbereichs freigibt, wenn das Einlegeteil mittels der Positionshülse aufgenommen wurde.

Eine weitere mögliche Ausgestaltung der Erfindung sieht vor, dass die Aufnahmeeinrichtung zwei verschwenkbare Backen aufweist, welche durch die Relativbewegung der Positionierhülse zur Aufnahmeeinrichtung von einer geschlossenen Stellung, in der die Backen ein Herausbewegen des Einlegeteils in Richtung des Formbereichs aus den Backen sperren, in eine offene Stellung verschwenkbar sind, in welcher die Positionierhülse mitsamt dem Einlegeteil durch die geöffneten Backen in Richtung des Formbereichs hindurchtauchen kann. Im geschlossenen Zustand der Backen kann das Einlegeteil also von oben zwar zwischen die Backen und in diese hineingelangen, sodass das Einlegeteil in den besagten Aufnahmebereich gelangt. Die Backen weisen also nach oben hin, also in Richtung des Zuführkanals, eine Öffnung auf, durch welche das Einlegeteil auch bei geschlossenen Backen zwischen die Backen gelangen kann. Die Backen sind unten, also auf der vom Zuführkanal abgewandten Seite so geformt, dass das Einlegeteil bei geschlossenen Backen nicht nach unten durchfallen kann, sondern auf den Backen aufliegt. Der Aufnahmebereich wird durch die geschlossenen Backen so begrenzt, dass das Einlegeteil in axialer Richtung, also in Richtung des Formbereichs, nicht bewegt werden kann. Wird nun die Positionierhülse zwischen die Backen geschoben, so gelangt eine stirnseitige Aussparung der Positionierhülse zunächst in den durch die Backen begrenzten Aufnahmebereich, in dem sich das Einlegeteil befindet, wenn es schwerkraftbedingt durch den Zuführkanal nach unten in Richtung des Aufnahmebereichs gelangt ist. In Folge dessen stülpt sich die Positionierhülse stirnseitig über den Schaft des Einlegeteils. Bei weiterer Fortbewegung der Positioniereinheit und somit der Positionierhülse innerhalb der Backen, werden diese von ihrer geschlossenen Stellung in die offene Stellung aufgespreizt beziehungsweise aufgeschwenkt. Sobald die Backen ihre offene beziehungsweise geöffnete Stellung erreicht haben, kann die Positionierhülse mitsamt dem Einlegeteil durch die geöffneten Backen in Richtung des Formbereichs hindurchtauchen. Mittels der Backen ist es also einerseits möglich, das Einlegeteil zuverlässig im Aufnahmebereich aufzufangen. Zum anderen ist es mittels der Backen auch möglich, das im Aufnahmebereich angeordnete Einlegeteil so lange zu fixieren, bis die Positionierhülse über den Schaft des Einlegeteils gestülpt wurde. Danach können die Backen in ihre offene Stellung bewegt werden, sodass die Bewegung der Positionierhülse mitsamt dem aufgenommenen Einlegeteil in Richtung des Formbereichs freigegeben wird.

Eine weitere mögliche Ausgestaltung der Erfindung sieht vor, dass die Positionierhülse einen Vorsprung aufweist, der bei der Relativbewegung der Positionierhülse zur Aufnahmeeinrichtung eine konische Engstelle zwischen den Backen entlanggleitet und diese dadurch von der geschlossenen Stellung in die geöffnete Stellung verschwenkt. Auf diese Art ist es ganz einfach möglich, mittels des Vorsprungs an der Positionierhülse die beiden Backen aufzuspreizen beziehungswiese von ihrer geschlossenen Stellung in die geöffnete Stellung zu verschwenken.

In weiterer möglicher Ausgestaltung der Erfindung ist es vorgesehen, dass die Aufnahmeeinrichtung Rastelemente, insbesondere Kugelrasten, aufweist, welche dazu ausgelegt sind, die Backen in ihrer geöffneten Stellung zu fixieren. Wurden die Backen also einmal in ihre geöffnete Stellung verbracht, so können die Rastelemente auf zuverlässige Weise dafür sorgen, dass die Backen auch in ihrer geöffneten Stellung verbleiben.

Eine alternative mögliche Ausgestaltung der Erfindung sieht vor, dass die Werkzeughälfte eine zwischen einer Fixierstellung und Freigabestellung verschwenkbare Fixiereinheit aufweist, wobei die Fixiereinheit in der Fixierstellung so weit in den Beförderungskanal hineinragt, dass diese eine Bewegung des im Aufnahmebereich in der Aufnahmeeinrichtung angeordneten Einlegteils in Richtung des Formbereichs blockiert. Die Fixiereinheit ist in ihrer Freigabestellung so weit aus dem Beförderungskanal herausgeschwenkt, dass diese eine Bewegung der Positionierhülse mitsamt dem durch diese umschlossenen Schaft des Einlegeteils in Richtung des Formbereichs freigibt. Bei dieser möglichen Ausgestaltung der Erfindung sorgt also die verschwenkbare Fixiereinheit dafür, dass das Einlegeteil so lange im Aufnahmebereich fixiert bleibt, bis die Positionierhülse über den Schaft des Einlegeteils gestülpt wurde, sodass das Einlegeteil von der Positionierhülse aufgenommen ist.

Eine weitere mögliche Ausgestaltung der Erfindung sieht vor, dass eine als Schraubenfeder oder als Schenkelfeder ausgebildete Rückstellfeder eine Rückstellkraft in Richtung der Fixierstellung auf die Fixiereinheit ausübt. Im ansonsten unbelasteten Zustand sorgt also die Rückstellfeder dafür, dass die Fixiereinheit automatisch ihre Fixierstellung einnimmt. Wird die Positioniereinheit dann fest genug gegen die Fixiereinheit gedrückt und dadurch die von der Rückstellfeder ausgeübte Rückstellkraft überwunden, kann die Fixiereinheit in ihre Freigabestellung verschwenkt werden. Die Rückstellfeder kann dafür sorgen, dass die Fixiereinheit während des Verschwenkens immer in Anlage mit dem Einlegeteil verbleibt, sodass dieses in Richtung der Positionierhülse gedrückt wird.

Gemäß einer weiteren möglichen Ausgestaltung der Erfindung ist es vorgesehen, dass die Fixiereinheit mittels eines Kugellagers verschwenkbar gelagert ist. Dies ermöglicht eine besonders leichtgängige und verschleißarme Verschwenkung der Fixiereinheit. In einer Aussparung der Fixiereinheit kann beispielsweise das Kugellager montiert sein, wobei z.B. ein Passstift innenseitig am Kugellager montiert sein kann. Der Passstift kann an entsprechend gestalteten Lagerbereichen der Werkzeughälfte fixiert sein.

In weiterer möglicher Ausgestaltung der Erfindung ist es vorgesehen, dass die Fixiereinheit eine Sperrnase aufweist, welche in der Freigabestellung der Fixiereinheit so weit in den Zuführkanal ragt, dass das durch den Zuführkanal herunterfallende Einlegeteil von der Sperrnase daran gehindert wird, in den Aufnahmebereich des Beförderungskanals zu gelangen. Hat die Positionierhülse also den Aufnahmebereich passiert, wird die Fixiereinheit automatisch in ihrer Freigabestellung gehalten. Eine Vereinzelung eines der Einlegeteile in den Zuführkanal kann dann schon mal erfolgen, da die Sperrnase dafür sorgt, dass dieses Einlegeteil nicht in den Aufnahmebereich bzw. auf die Positioniereinheit fallen kann. Wird die Positioniereinheit dann von der Spritzposition und die Entformposition bewegt, schwenkt die Fixiereinheit automatisch wieder zurück in ihre Fixierstellung. Die Sperrnase wird dabei zwangsläufig so zurückgeschwenkt, dass das zuvor noch von der Sperrnase gehaltene Einlegeteil nun in den Aufnahmebereich fallen kann, wo es von der Positioniereinheit aufgefangen werden kann. Die dann noch zurückzulegende Fallhöhe bis zur Positioniereinheit ist wesentlich geringer als wenn das Einlegeteil durch den gesamten Zuführkanal, ohne vorher von der Sperrnase gestoppt zu werden, herunterfallen würde. Mit einer entsprechend verringerten Fallgeschwindigkeit landet dann das Einlegeteil auf der Positioniereinheit, wenn diese in der Entformposition angeordnet wurde. Das trägt dazu bei, dass das betreffende Einlegeteil zuverlässig mittels der Positioniereinheit aufgenommen werden kann.

Eine alternative mögliche Ausgestaltung der Erfindung sieht vor, dass die Werkzeughälfte einen Sperrstift aufweist, der zwischen einer Sperrstellung und einer Freigabestellung bewegbar ist, wobei in der Sperrstellung das durch den Zuführkanal herunterfallende Einlegeteil vom Sperrstift darin gehindert wird, in den Aufnahmebereich des Beförderungskanals zu gelangen, und in der Freigabestellung das durch den Zuführkanal herunterfallende Einlegeteil den Sperrstift passieren und in den Aufnahmebereich des Beförderungskanals Zuführkanal gelangen kann. Der Sperrstift kann insbesondere knapp oberhalb vom Aufnahmebereich am bzw. im Zuführkanal angeordnet sind. Auch bei dieser Ausführungsform kann dafür gesorgt werden, dass das jeweilige Einlegeteil nicht auf direktem Weg durch den gesamten Zuführkanal in den Aufnahmebereich fällt. Wann immer eines der Einzelteile vereinzelt und dem Zuführkanal zugeführt wird, wird der Sperrstift so rechtzeitig in seine Sperrstellung verstellt, dass das betreffende Einlegeteil zunächst auf den Sperrstift fällt. Erst danach wird der Sperrstift in seine Freigabestellung bewegt, sodass das Einlegeteil dann weiter in Richtung des Aufnahmebereichs fällt. Die dann noch zurückzulegende Fallhöhe bis zur Positioniereinheit ist wesentlich geringer als wenn das Einlegeteil durch den gesamten Zuführkanal, ohne vorher von dem Sperrstift gestoppt zu werden, herunterfallen würde. Mit einer entsprechend verringerten Fallgeschwindigkeit landet dann das Einlegeteil auf der Positioniereinheit, wenn diese in der Entformposition angeordnet wurde. Das trägt dazu bei, dass das betreffende Einlegeteil zuverlässig mittels der Positioniereinheit aufgenommen werden kann.

Es ist zudem auch möglich, dass das Einlegeteil, ohne auf dem Weg durch den Zuführkanal gestoppt zu werden, in den Aufnahmebereich fallengelassen wird. Damit das Einlegeteil dennoch nicht zu schnell auf eine Aufnahme der Positioniereinheit fällt, kann es vorgesehen sein, dass die jeweiligen Einlegeteile dann durch den Zuführkanal herunterfallen gelassen werden, wenn die Positioniereinheit sich noch nicht in ihrer Entformposition befindet. Das betreffende Einlegeteil fällt dann auf eine äußere Mantelfläche der Positioniereinheit, welche unter dem Zuführkanal angeordnet ist. Danach erst wird die Positioniereinheit in ihre Entformposition bewegt. Mit Erreichen der Entformposition fällt dann dass betreffende Einlegeteil noch das verbleibende geringe Stück in den Aufnahmebereich herunter, wo die Aufnahme der Positioniereinheit das Einlegeteil aufnimmt. Die dann noch zurückzulegende Fallhöhe bis zur Aufnahme der Positioniereinheit ist wesentlich geringer als wenn das Einlegeteil durch den gesamten Zuführkanal, ohne vorher auf die Mantelfläche der Positioniereinheit zu treffen, herunterfallen würde. Mit einer entsprechend verringerten Fallgeschwindigkeit landet dann das Einlegeteil auf der Aufnahme der Positioniereinheit, wenn diese in der Entformposition angeordnet wurde. Das trägt dazu bei, dass das betreffende Einlegeteil zuverlässig mittels der Positioniereinheit aufgenommen werden kann.

Eine weitere mögliche Ausgestaltung der Erfindung sieht vor, dass die Aufnahmeeinrichtung eine in axialer Richtung relativbeweglich zur Positionierhülse gelagerte Aufnahmehülse umfasst, deren schalenförmiger Aufnahmeabschnitt zwischen einer aus der Positionierhülse herausragenden Aufnahmestellung und einer in der Positionierhülse versenkten Übergabestellung verstellbar ist. In der Entformposition der Positioniereinheit drückt ein unbeweglich an der Werkzeughälfte angeordneter Ausrückstift an einem vom schalenförmigen Aufnahmeabschnitt abgewandten Ende auf die Aufnahmehülse und zwingt den schalenförmigen Aufnahmeabschnitt dadurch in die herausragende Aufnahmestellung, in welcher der schalenförmige Aufnahmeabschnitt der Aufnahmehülse im Aufnahmebereich des Beförderungskanals zum Auffangen des Einlegeteils angeordnet ist. Beim Bewegen der Positioniereinheit von der Entformposition in die Spritzposition entfernt sich das vom schalenförmigen Aufnahmeabschnitt abgewandte Ende der Aufnahmehülse vom Ausrückstift und eine Einrückfeder verstellt den schalenförmigen Aufnahmeabschnitt der Aufnahmehülse in die versenkte Übergabestellung. Spätestens mit Erreichen der Übergabestellung und weiterer Bewegung der Positioniereinheit in Richtung der Spritzposition wird die Fixiereinheit durch das aufgenommene Einlegeteil und/oder die Positionierhülse in die Freigabestellung verschwenkt. In der Entformposition ist also automatisch der schalenförmige Aufnahmeabschnitt der Aufnahmehülse unterhalb vom Zuführkanal im besagten Aufnahmebereich angeordnet. Denn der unbeweglich an der Werkzeughälfte angeordnete Ausrückstift und die Positioniereinheit sind in der Entformposition so zueinander angeordnet, dass der Ausrückstift die Aufnahmehülse so weit aus der Positionierhülse herausdrückt, dass der schalenförmige Aufnahmeabschnitt der Aufnahmehülse in der Aufnahmestellung angeordnet ist. Fällt das Einlegeteil schwerkraftbedingt durch den Zuführkanal in Richtung des Aufnahmebereichs des Beförderungskanals, so wird das Einlegeteil automatisch durch den schalenförmigen Aufnahmeabschnitt der Aufnahmehülse aufgefangen. Wird dann die Positioniereinheit von der Entformposition in die Spritzposition bewegt, so wird auch die Aufnahmehülse entsprechend von dem Ausrückstift wegbewegt. Die zuvor noch gestauchte bzw. gespannte Einrückfeder entspannt sich, je weiter die Positioniereinheit von dem Ausrückstift wegbewegt wird. Dabei drückt oder zieht die Einrückfeder die Aufnahmehülse in die Positionierhülse hinein, und zwar so weit, bis schließlich der schalenförmige Aufnahmeabschnitt in seine in der Positionierhülse versenkten Übergabestellung angeordnet wurde. Bei weiterer Bewegung der Positioniereinheit kann der Kontakt zwischen dem Ausrückstift und der Aufnahmehülse vollständig aufgehoben werden, das vom Aufnahmeabschnitt abgewandte Ende der Aufnahmehülse liegt also gar nicht mehr am Ausrückstift an. Die Einrückfeder sorgt weiterhin dafür, dass der schalenförmige Aufnahmeabschnitt in seiner in der Positionierhülse versenkten Übergabestellung bleibt. Das aufgenommene Einlegeteil bleibt somit auch weiter versenkt in der Positionierhülse angeordnet und durch diese umschlossen. Wird die Positioniereinheit dann weiter in Richtung der Spritzposition bewegt, drückt das aufgenommene Einlegeteil und/oder die Positionierhülse gegen die Fixiereinheit und schwenkt diese in die Freigabestellung, sodass mit Erreichen der Freigabestellung die Positionierhülse mitsamt dem aufgenommenen Einlegeteil die Fixiereinheit passieren kann, sodass das Einlegeteil in der Spritgussposition angeordnet werden kann.

Gemäß einer weiteren möglichen Ausgestaltung der Erfindung ist es vorgesehen, dass die Werkzeughälfte eine Verriegelungseinheit aufweist, welche dazu ausgelegt ist, die Positioniereinheit in ihrer Spritzposition zu verriegeln, in der das mittels der Positioniereinheit aufgenommene Einlegeteil in die Spritzgussposition angeordnet ist. Die Verriegelungseinheit kann beispielsweise über eine Art Klaue verfügen, welche so ausgefahren werden kann, dass diese eine Bewegung der Positioniereinheit sperrt. Auch ist es beispielsweise möglich, dass der besagte Kernzug und die Positioniereinheit mittels eines hydraulischen Zylinders bewegbar sind, wobei der hydraulische Zylinder über besagte Verriegelungseinheit verriegelt werden kann. Die Verriegelungseinheit kann auch beispielsweise über eine Art seitliche Kulisse für die Verriegelung der Positioniereinheit sorgen. Mittels der Verriegelungseinheit kann sichergestellt werden, dass die Positioniereinheit in ihrer Spritzposition verriegelt wird. Beim Spritzgussvorgang herrschen mitunter sehr hohe Drücke, sodass durch Verriegeln der Positioniereinheit in ihrer Spritzposition sichergestellt werden kann, dass weder die Positioniereinheit noch das mittels der Positioniereinheit aufgenommene Einlegeteil in unerwünschter Weise durch den Spritzdruck verschoben beziehungsweise bewegt werden.

In weiterer möglicher Ausgestaltung der Erfindung ist es vorgesehen, dass die Werkzeughälfte eine Sensorik aufweist, welche dazu ausgelegt ist, eine Position des Einlegeteils und/oder der Positioniereinheit zu ermitteln und entsprechende Positionssignale an eine Steuerung der Werkzeughälfte zu übermitteln. Die Steuerung ist dazu eingerichtet, in Abhängigkeit von den Sensorsignalen die Positioniereinheit zum Befördern des Einlegeteils in die Spritzgussposition anzusteuern. Die Positioniereinheit muss vor dem Zuführen des Einlegeteils in der Entformposition angeordnet sein. Dies kann mittels der Sensorik überprüft werden, welche dafür beispielsweise Näherungsschalter aufweisen kann. Mittels der Sensorik kann zudem auch überprüft werden, ob das Einlegeteil korrekt in dem Aufnahmebereich angeordnet wurde. Die Sensorik kann beispielsweise auch dazu ausgelegt sein, zu überprüfen, ob die Positioniereinheit in ihrer Spritzposition angeordnet ist und/oder ob das Einlegeteil in der vorgegebenen Spritzgussposition im Bereich des Formbereichs angeordnet ist. Die Spritzposition der Positioniereinheit kann dabei einer Endlage der Positioniereinheit entsprechen. Diese Endlage der Positioniereinheit kann beispielsweise mittels Endschaltern, welche Teil der Sensorik sein können, abgefragt werden. Die Steuerung ist dazu eingerichtet, jeweilige Sensorsignale der Sensorik auszuwerten und dadurch zu überprüfen, ob das Einlegeteil während des Zuführvorgangs beziehungsweise Beförderungsvorgangs des Einlegeteils bis zur Spritzgussposition immer entsprechend richtig angeordnet ist. Dadurch kann ein besonders zuverlässiger Zuführprozess des Einlegeteils bis zur Spritzgussposition sichergestellt werden. Durch die integrierte Steuerung der Werkzeughälfte, kann die Werkzeughälfte sämtliche die Zuführung und Positionierung des Einlegeteils betreffenden Aktionen selbst steuern. Die Spritzgussmaschine, bei der die Werkzeughälfte eingesetzt bzw. verbaut wird, muss selbst also keine Steuerung aufweisen, welche die Positioniereinheit ansteuern kann. Die Werkzeughälfte kann dadurch auch ganz einfach an unterschiedlichen Spritzgussmaschinen verbaut werden, ohne dass aufwendige Umrüstmaßnahmen an der betreffenden Spritzgussmaschine im Hinblick auf die Steuerung notwendig werden.

Eine weitere mögliche Ausgestaltung der Erfindung sieht vor, dass die Steuerung dazu eingerichtet ist, eine Zuführvorrichtung, welche dazu ausgelegt ist, eine Vielzahl der Einlegeteile zu vereinzeln und dem Zuführkanal zuzuführen, zum Zuführen des Einlegeteils in den Aufnahmebereich des Beförderungskanals in Abhängigkeit von den Sensorsignalen anzusteuern. So kann die Sensorik beispielsweise überprüfen, ob die Positioniereinheit in ihrer Entformposition angeordnet ist. Falls dies der Fall sein sollte, kann die Steuerung wiederum die Zuführvorrichtung so ansteuern, dass diese eines der Einlegeteile vereinzelt und dem Zuführkanal zuführt, sodass das jeweilige Einlegeteil schwerkraftbedingt bis zum Aufnahmebereich des Beförderungskanals gelangen kann. Bei der Zuführvorrichtung kann es sich beispielsweise um ein Magazin handeln, das an der Werkzeughälfte angebracht werden kann, um für jeweilige Spritzgussvorgänge jeweilige Einlegeteile zu vereinzeln und dem Zuführkanal zuführen. Auch kann es sich um ein Peripheriegerät bei der Zuführvorrichtung handeln, welches beispielsweise über einen Rütteltopf verfügt, von wo aus zum Beispiel pneumatisch über einen Schlauch die Einlegeteile bis zur Werkzeughälfte und somit zum Zuführkanal befördert werden können. Die Werkzeughälfte kann also über ihre eigene Steuerung unter Berücksichtigung der Sensorsignale eine solche Zuführvorrichtung ansteuern.

Gemäß einer weiteren möglichen Ausgestaltung der Erfindung ist es vorgesehen, dass die Steuerung dazu eingerichtet ist, die Spritzgussmaschine zum Herstellen des Spritzgussteils anzusteuern, wenn die Steuerung anhand der Sensorsignale ermittelt hat, dass das Einlegeteil in der Spritzgussposition angeordnet ist. Die Werkzeughälfte selbst kann also über ihre integrierte Steuerung die Spritzgussmaschine ansteuern, in welcher die Werkzeughälfte verbaut ist. Sobald anhand der Sensorsignale ermittelt wurde, dass das Einlegeteil sich in der Spritzgussposition befindet, kann die Steuerung die Spritzgussmaschine so ansteuern, dass ein die Werkzeughälfte umfassendes Spritzgusswerkzeug der Spritzgussmaschine geschlossen, anschließend ein Kunststoff in die Kavität gespritzt und dadurch das in der Spritzgussposition angeordnete Einlegeteil unter Ausbildung des Spritzgussteils vom Kunststoff umspritzt wird.

Eine weitere Ausführungsform der Erfindung sieht vor, dass die Werkzeughälfte mehrere der Positioniereinheiten aufweist, wobei der Zuführkanal sich in der Anzahl der Positioniereinheiten entsprechende Zuführkanalabschnitte verzweigt, die in jeweiligen Aufnahmebereichen jeweiliger Beförderungskanäle münden. Durch die insbesondere in radialer Richtung besonders kompakte Gestaltungsmöglichkeit der Positioniereinheiten können z.B. auch mehrere dieser Positioniereinheiten nebeneinander in jeweiligen Beförderungskanälen der Werkzeughälfte angeordnet sein. Über die Zuführkanalabschnitte können jeweilige Einlegeteile zu jeweiligen Aufnahmebereichen in den Beförderungskanälen gelangen, von wo aus die jeweiligen Positioniereinheiten die Einlegeteile zur Kavität, z.B. zu unterschiedlichen Formnesten, befördern können. Im Zuführkanal kann eine Weiche vorgesehen sein, die dazu ausgelegt ist, die vereinzelt dem Zuführkanal zugeführten Einlegeteile auf die Zuführkanalabschnitte zu verteilen.

Bei dem erfindungsgemäßen Verfahren zum Herstellen eines Spritzgussteils mit wenigstens einem bolzenartigen Einlegeteil wird die erfindungsgemäße Werkzeughälfte oder eine mögliche Ausgestaltung der erfindungsgemäßen Werkzeughälfte verwendet, wobei zunächst das Einlegeteil in den Zuführkanal zugeführt wird, wonach das Einlegeteil schwerkraftbedingt in den Aufnahmebereich des Beförderungskanals gelangt. Anschließend wird die Positioniereinheit von der Entformposition bis zur Spritzposition bewegt, in Folge dessen die Positioniereinheit einen Schaft des im Aufnahmebereich angeordneten Einlegeteils umschließt und dieses aufnimmt sowie bis zur Spritzposition im Bereich des Formbereichs befördert. Danach wird eine Spritzgussmaschine zum Herstellen des Spritzgussteils mittels einer Steuerung der Werkzeughälfte angesteuert, und zwar so, dass ein die Werkzeughälfte umfassendes Spritzgusswerkzeug der Spritzgussmaschine geschlossen, ein Kunststoff in die Kavität gespritzt und das in der Spritzgussposition angeordnete Einlegeteil unter Ausbildung des Spritzgussteils vom Kunststoff umspritzt wird. Die erläuterten möglichen Ausgestaltungen der Werkzeughälfte sind als mögliche Ausgestaltungen des Verfahrens und umgekehrt anzusehen, wobei die Werkzeughälfte insbesondere Mittel zur Durchführung der Verfahrensschritte aufweist.

Die die Werkzeughälfte kann eine Sensorik aufweisen, welche dazu ausgelegt ist, eine Position des Einlegeteils und/oder der Positioniereinheit zu ermitteln und entsprechende Positionssignale an eine Steuerung der Werkzeughälfte zu übermitteln, wobei die Steuerung dazu eingerichtet sein kann, in Abhängigkeit von den Sensorsignalen die Positioniereinheit zum Befördern des Einlegeteils in die Spritzgussposition anzusteuern.

Die Steuerung kann dazu eingerichtet sein, eine Zuführvorrichtung, welche dazu ausgelegt ist, eine Vielzahl der Einlegeteile zu vereinzeln und dem Zuführkanal zuzuführen, zum Zuführen des Einlegeteils in den Aufnahmebereich des Beförderungskanals in Abhängigkeit von den Sensorsignalen anzusteuern.

Die Steuerung kann dazu eingerichtet sein, die Spritzgussmaschine zum Herstellen des Spritzgussteils anzusteuern, wenn die Steuerung anhand der Sensorsignale ermittelt hat, dass das Einlegeteil in der Spritzgussposition angeordnet ist.

Die Werkzeughälfte kann mehrere der Positioniereinheiten aufweisen, wobei der Zuführkanal sich in der Anzahl der Positioniereinheiten entsprechende Zuführkanalabschnitte verzweigt, die in jeweiligen Aufnahmebereichen jeweiliger Beförderungskanäle münden.

Weitere Vorteile, Merkmale und Einzelheiten der Erfindung können sich aus der nachfolgenden Beschreibung möglicher Ausführungsbeispiele sowie anhand der Zeichnung ergeben.

### Kurze Figurenbeschreibung

Die Zeichnung zeigt in:
- Fig. 1: eine schematische Draufsicht auf eine Spritzgussmaschine, die zwei Werkzeughälften aufweist, mittels welchen ein Spritzgussteil mit wenigstens einem bolzenartigen Einlegeteil hergestellt werden kann, wobei eine der beiden Werkzeughälften eine Art integrierten Zuführmechanismus zum Zuführen des bolzenartigen Einlegeteils in einer Spritzgussposition aufweist;
- Fig. 2: eine Perspektivansicht der Werkzeughälfte mit dem integrierten Zuführmechanismus, wobei oberseitig an der Werkzeughälfte ein Magazin zum Bereitstellen und Vereinzeln einer Vielzahl der Einlegeteile angebracht ist;
- Fig. 3: eine Detailansicht eines oberen Bereichs des Magazins, an welchem ein Schlauch zum Zuführen der Einlegeteile angeschlossen ist;
- Fig. 4: eine Detailansicht eines mittleren Bereichs des Magazins, wobei mittels einer Vereinzelungsvorrichtung die bevorrateten Einlegeteile vereinzelt werden;
- Fig. 5: eine seitliche Schnittansicht der beiden Werkzeughälften im geschlossenen Zustand, wobei sich im Inneren der einen Werkzeughälfte eine Positioniereinheit befindet, welche dazu dient, die bolzenförmigen Einlegeteile im Bereich eines Formeinsatzes zu positionieren;
- Fig. 6: eine Perspektivansicht einer ersten Ausführungsform der Positioniereinheit, wobei zwei verschwenkbare Backen zum Aufnehmen der jeweiligen Einlegeteile angeordnet sind;
- Fig. 7: eine Abfolge von Abbildungen, in denen eine Relativbewegung der Positioniereinheit zu den Backen dargestellt ist, in Folge dessen sich die Backen nach außen verschwenken;
- Fig. 8: eine zweite Ausführungsform der Positioniereinheit in einer Perspektivansicht, wobei die Positioniereinheit eine Aufnahmehülse zum Aufnehmen der jeweiligen Einlegeteile sowie eine Positionierhülse zum Positionieren der jeweiligen Einlegeteile in der Spritzgussposition aufweist und mit einer ersten Ausführungsform einer verschwenkbaren Fixiereinheit zusammenwirkt;
- Fig. 9: eine perspektivische Detailansicht der zweiten Ausführungsform der Positioniereinheit und der ersten Ausführungsform der Fixiereinheit;
- Fig. 10: eine teilweise geschnittene Ansicht der Werkzeughälfte, wobei sich die zweite Ausführungsform der Positioniereinheit in ihrer Entformposition befindet;
- Fig. 11: eine teilweise geschnittene Detailansicht der zweiten Ausführungsform der Positioniereinheit, wenn diese sich in der Entformposition befindet;
- Fig. 12: eine teilweise geschnittene Ansicht der Werkzeughälfte, wobei sich die zweite Ausführungsform der Positioniereinheit in ihrer Spritzposition befindet;
- Fig. 13: eine teilweise geschnittene Detailansicht der zweiten Ausführungsform der Positioniereinheit, wobei diese sich zwischen der Entformposition und Spritzposition befindet;
- Fig. 14: eine Abfolge von Abbildungen, in denen ein Zusammenspiel zwischen der zweiten Ausführungsform der Positioniereinheit und der ersten Ausführungsform der Fixiereinheit dargestellt ist;
- Fig. 15: eine Abfolge von Abbildungen, in denen Zusammenspiel zwischen der zweiten Ausführungsform der Positioniereinheit und der ersten Ausführungsform der Fixiereinheit gemäß einer weiteren Verfahrensvariante dargestellt ist;
- Fig. 16: eine Abfolge von Abbildungen, in denen Zusammenspiel zwischen der zweiten Ausführungsform der Positioniereinheit und der ersten Ausführungsform der Fixiereinheit gemäß einer weiteren Verfahrensvariante dargestellt ist;
- Fig. 17: eine perspektivische Detailansicht eines vorderen Teils der zweiten Ausführungsform der Positioniereinheit und einer zweiten Ausführungsform der Fixiereinheit;
- Fig. 18: eine Abfolge von Abbildungen, in denen Zusammenspiel zwischen der zweiten Ausführungsform der Positioniereinheit und der zweiten Ausführungsform der Fixiereinheit dargestellt ist;
- Fig. 19: eine Frontalansicht auf mehrere der nebeneinander angeordneten Positioniereinheiten gemäß der zweiten Ausführungsform;
- Fig. 20: eine Perspektivansicht einer ersten Ausführungsform einer Verriegelungseinheit, mittels welcher die Positioniereinheit verriegelt werden kann;
- Fig. 21: eine Perspektivansicht einer zweiten Ausführungsform der Verriegelungseinheit;

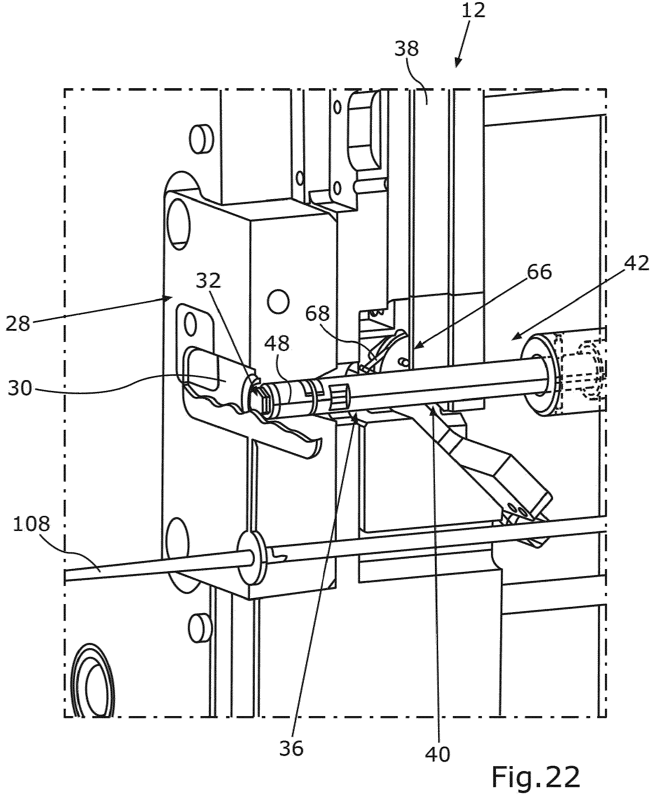

- Fig. 22: eine teilweise geschnittene Perspektivansicht der Werkzeughälfte, wobei ein Spritzgussvorgang dargestellt ist, bei welchem das in der Spritzgussposition angeordnete Einlegeteil unter Ausbildung des Spritzgussteils mit einem Kunststoff umspritzt wird.

In den Figuren sind gleiche oder funktionsgleiche Elemente mit den gleichen Bezugszeichen versehen worden.

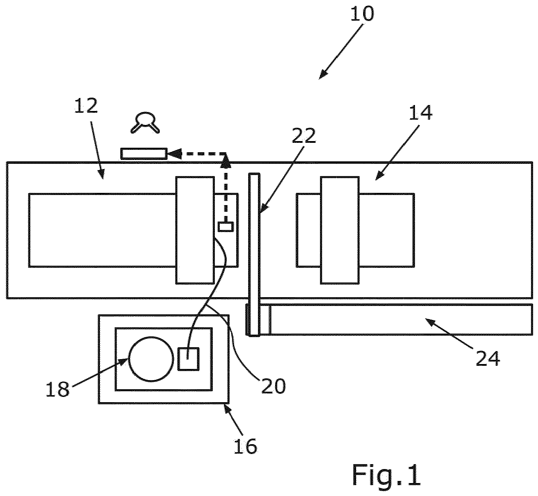

Eine Spritzgussmaschine 10 ist in einer schematischen Draufsicht in Fig. 1 gezeigt. Die Spritzgussmaschine 10 umfasst zwei Werkzeughälften 12, 14, mittels welchen ein Spritzgussteil mit einem umspritzten bolzenartigen Einlegeteil hergestellt werden kann. Die gemäß der vorliegenden Darstellung linke Werkzeughälfte 12 umfasst eine Art integrierte Zuführmechanik, mittels welcher die bolzenartige Einlegeteile in den Bereich einer Kavität der beiden Werkzeughälften 12, 14 befördert werden kann. Zur Spritzgussmaschine 10 kann noch eine Zuführperipherie 16 gehören, welche einen Rütteltopf 18 zum Bevorraten und Vereinzeln der bolzenartigen Einlegeteile aufweisen kann. Die Zuführperipherie 16 kann zudem einen Schlauch 20 aufweisen, mittels welchem beispielsweise pneumatisch die vereinzelten Einlegeteile der Werkzeughälfte 12 zugeführt werden können. Die gesamte Zuführperipherie 16 kann mobil ausgestaltet sein, kann also bei Bedarf an unterschiedlichen Spritzgussmaschinen 10 bereitgestellt werden. Die Spritzgussmaschine 10 kann darüber hinaus über ein Linearhandling 22 beziehungsweise einen Roboter verfügen, mittels welchem die hergestellten Spritzgussteile aus den geöffneten Werkzeughälften 12, 14 entnommen und zum Beispiel auf einem Förderband 24 abgelegt werden können.

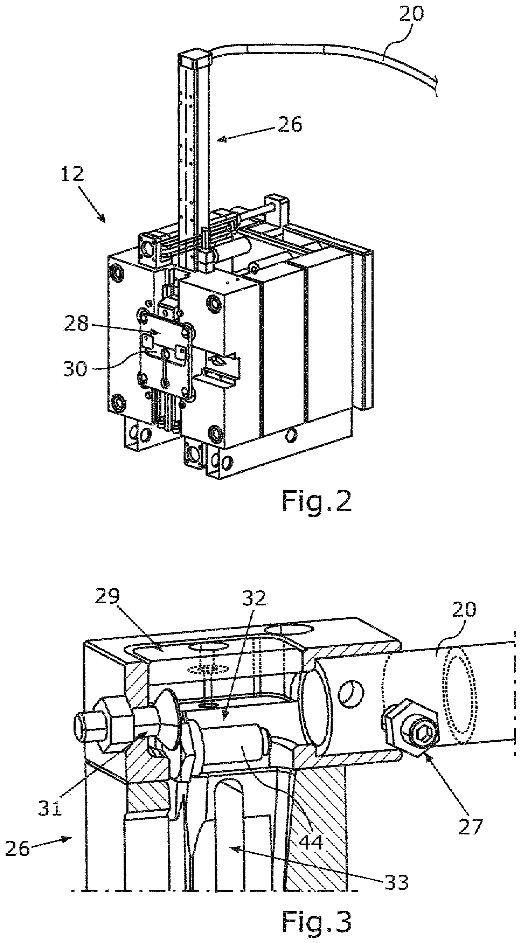

In Fig. 2 ist die Werkzeughälfte 12 in einer Perspektivansicht gezeigt. Oberseitig am Werkzeug 12 ist ein Magazin 26 angeschlossen, das über den bereits erwähnten Schlauch 20 mit den bolzenartigen Einlegeteilen versorgt werden kann. Die Zuführung der Einlegeteile mittels des Schlauchs 20 ist insbesondere dann von Vorteil, wenn sehr viele Spritzgussteile hergestellt werden, also fortlaufend die Einlegeteile benötigt werden. Über den Schlauch 20 kann das Magazin 26 automatisch mit den Einlegeteilen befüllt werden. Bei geringeren Stückzahlen kann auch das Magazin 26 ohne Schlauch 20 betrieben werden. In dem Fall kann das Magazin 26 beispielsweise während Stillstandszeiten mit den Einlegeteilen befüllt werden.

Bei den bolzenartigen Einlegeteilen 32 kann es sich beispielsweise um Schrauben, Bolzen, Passstifte oder dergleichen handeln. Durch das Magazin 26 können die bolzenartigen Einlegeteile ins Innere der Werkzeughälfte 12 gelangen und von dort aus im Bereich eines Formeinsatzes 28, der zumindest einen Teil einer Kavität 30 für das Spritzgussteil bildet, angeordnet werden.

In Fig. 3 ist das Magazin 26 in einer teilweise geschnittenen Ansicht in einem oberen Bereich gezeigt. Vorliegend kann man erkennen, wie über den Schlauch 20 eines der bolzenartigen Einlegeteile 32, vorliegend in Form einer Schraube, dem Magazin 26 zugeführt wird. Der Schlauch 20 ist mittels einer Schlauchfixierung 27 befestigt. Oberhalb von einem nicht näher bezeichneten oberen Bereich, in den die jeweiligen Einlegeteile 32 zunächst über den Schlauch 20 gelangen können, ist eine Abdeckplatte 29 vorgesehen. Gegenüberliegend von einer Öffnung des Schlauchs 20, durch den die Einlegeteile 32 in den oberen Bereich unterhalb von der Abdeckplatte 29 gelangen, ist ein Abstimmstift 31 vorgesehen. Dieser kann in den oberen Bereich hinein- und auch aus diesem herausbewegt werden. Beispielsweise kann der Abstimmstift 31 über ein Gewinde in den oberen Bereich hineingedreht und aus diesem herausgedreht werden. Durch entsprechende Justierung des Abstimmstifts 31 kann sichergestellt werden, dass die jeweiligen Einlegeteile 32 passgenau oberhalb von einem Magazinschacht 33 angeordnet werden.

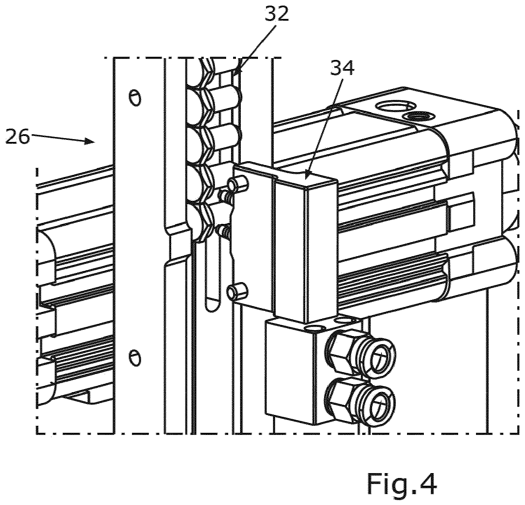

In Fig. 4 ist wiederum das Magazin 26, nun in einem weiter unten befindlichen Abschnitt, in einer Perspektivansicht gezeigt. Das Magazin 26 ist vorliegend teilweise geöffnet dargestellt, sodass der Blick aufs Innere des Magazins 26 freigegeben wird. Wie zu erkennen, sind in dem Magazin 26 in vertikaler Richtung übereinander mehrere der Einlegeteile 32 angeordnet. Zudem ist noch eine Vereinzelungsvorrichtung 34 zu erkennen, welche dazu dient, die im Magazin 26 aufgenommenen Einlegeteile 32 einzeln der Werkzeughälfte 12 zuzuführen. Die Vereinzelungsvorrichtung 34 kann beispielsweise pneumatisch angetrieben werden, sodass die Vereinzelungsvorrichtung 34 auf und ab bewegt werden kann, wobei diese dabei immer wieder eines der Einlegeteile 32 freigeben kann, sodass diese einzeln schwerkraftbedingt nach unten in Richtung der Werkzeughälfte 12 gelangen können.

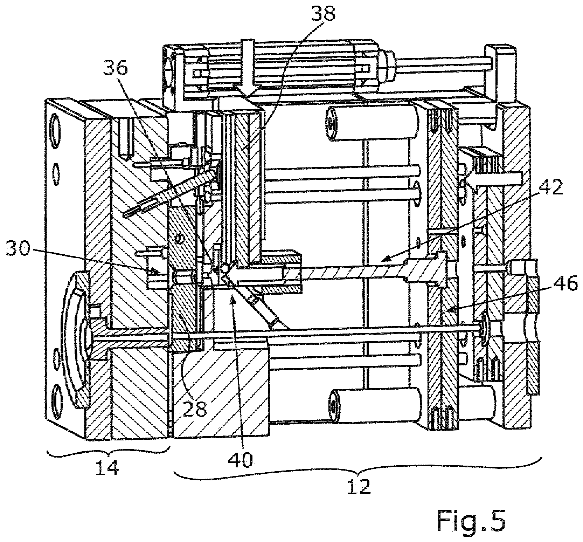

In Fig. 5 sind die beiden Werkzeughälften 12, 14 in einer Seitenschnittansicht im geschlossenen Zustand gezeigt. Die Werkzeughälfte 12 weist einen horizontal verlaufenden Beförderungskanal 36 auf, der sich im Inneren der Werkzeughälfte 12 und durch den Formeinsatz 28 hindurch erstreckt. Der Beförderungskanal 36 muss aber nicht unbedingt rein horizontal verlaufen.

Zum Zuführen der hier nicht dargestellten Einlegeteile 32 ins Innere der Werkzeughälfte 12 umfasst diese einen Zuführkanal 38, der sich in vertikaler Richtung durch die Werkzeughälfte 12 erstreckt und in einen Aufnahmebereich 40 des Beförderungskanals 36 mündet. Des Weiteren umfasst die Werkzeughälfte 12 eine Positioniereinheit 42, die dazu ausgelegt ist, durch eine Bewegung von einer hier gezeigten Entformposition in eine Spritzposition einen Schaft 44 (siehe Fig. 3) des betreffenden Einlegeteils 32 zu umschließen und dadurch das betreffende Einlegeteil 32 aufzunehmen, wenn dieses im Aufnahmebereich 40 des Beförderungskanals 36 angeordnet ist, und das aufgenommene Einlegeteil 32 vom Aufnahmebereich 40 bis zu einer Spritzgussposition im Bereich des Formeinsatzes 28 zu befördern.

Die mittels des Magazins 26 vorgehaltenen Einlegeteile 32 können also vereinzelt und somit einzeln dem sich vertikal erstreckenden Zuführkanal 38 zugeführt werden. Schwerkraftbedingt fallen die Einlegeteile 32 dann einzeln durch den Zuführkanal 38 in den Aufnahmebereich 40 des Beförderungskanals 36. Dort kann die Positioniereinheit 42 den Schaft 44 des betreffenden Einlegeteils 32 umschließen und dadurch das Einlegeteil 32 aufnehmen und dieses vom Aufnahmebereich 40 - gemäß der vorliegenden Darstellung - nach links durch den Formeinsatz 28 hindurch bis zu der besagten Spritzgussposition befördern. In dieser Spritzgussposition ragt das Einlegeteil 32 dann so weit in die Kavität der beiden Werkzeughälften 12, 14 hinein, dass im Zuge eines Spritzgussvorgangs das so positionierte Einlegeteil 32 mit Kunststoff umspritzt werden kann.

Abweichend von den Darstellungen in den Fig. 2 bis 4 ist es auch möglich, das Magazin 26 wegzulassen. In dem Fall kann der Schlauch 20 so an der Werkzeughälfte 12 angeschlossen werden, dass die Einlegeteile 32 z.B. über den Schlauch 20 im oberen Bereich des Zuführkanals 38 vereinzelt zugeführt werden, wiederum beispielsweise mittels Druckluft. Auch ist es möglich, die Zuführteile mittels des Schlauchs 20 direkt im Inneren der Werkzeughälfte 12 zuzuführen, beispielsweise in einem unteren Bereich des Zuführkanals 38 bzw. oberhalb vom Aufnahmebereich 40.

Die Werkzeughälfte 12 umfasst einen Kernzug 46 zum Bewegen der Positioniereinheit 42 zwischen der hier gezeigten Entformposition und der besagten Spritzposition, welche sich gemäß der vorliegenden Darstellung dann weiter links befindet. Der Kernzug 46 kann beispielsweise hydraulisch angetrieben werden, um diesen nach links und rechts zu bewegen, in Folge dessen die Positioniereinheit 42 entsprechend zwischen der hier gezeigten Entformposition und der weiter links befindlichen Spritzposition hin und her bewegt werden kann. Es sind verschiedenste Antriebskonzepte möglich, um den Kernzug 46 und somit die Positioniereinheit 42 zu bewegen.

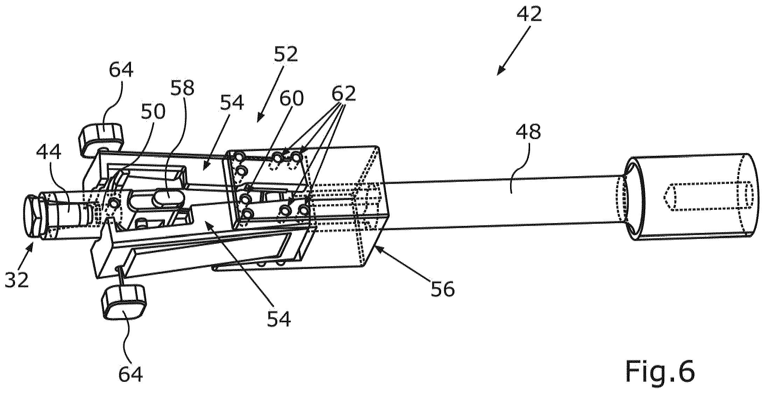

In Fig. 6 ist eine erste Ausführungsform der Positioniereinheit 42 in einer Perspektivansicht gezeigt. Die Positioniereinheit 42 verfügt über eine Positionierhülse 48, die bei bestimmungsgemäßer Anordnung der Positioniereinheit 42 innerhalb des Beförderungskanals 36 angeordnet und mit dem Kernzug 46 verbunden ist. Beim Bewegen der Positioniereinheit 42 von der Entformposition in die Spritzposition wird die Positionierhülse 48 innerhalb des Beförderungskanals 36 in Richtung des Formeinsatzes 28 bewegt und passiert dabei den Aufnahmebereich 40, sodass das jeweilige im Aufnahmebereich 40 angeordnete Einlegeteil 32 von der Positionierhülse 48 aufgenommen wird. Wie hier zu erkennen, weist die Positionierhülse 48 in einem stirnseitigen Bereich eine Aussparung auf, sodass die Positionierhülse 48 den jeweiligen Schaft 44 der Einlegeteile 32 umschließen kann. Wird die Positioniereinheit 42 dann noch weiter in Richtung der Spritzposition bewegt, so wird das aufgenommene Einlegeteil 32 in die Spritzgussposition im Bereich der Kavität 30 des Formeinsatzes 28 angeordnet.

Die Positionierhülse 48 weist einen Magnet 50 zum Fixieren des mittels der Positionierhülse 48 umschlossenen Schafts 44 des Einlegeteils 32 auf. Wurde das betreffende Einlegeteil 32 im Bereich seins Schafts 44 also von der Positionierhülse 48 aufgenommen beziehungsweise umschlossen, so sorgt der Magnet 50 zuverlässig dafür, dass das Einlegeteil 32 auch in der stirnseitigen Aussparung der Positionierhülse 48 verbleibt.

Eine Aufnahmeeinrichtung 52 ist in axialer Richtung relativbeweglich zur Positionierhülse 48 angeordnet. In der Entformposition der Positioniereinheit 42 ist die Aufnahmeeinrichtung 52 unterhalb vom Zuführkanal 38 im Aufnahmebereich 40 angeordnet, sodass das jeweilige schwerkraftbedingt durch den Zuführkanal 38 in den Aufnahmebereich 40 gelangende Einlegeteil 32 in die Aufnahmeeinrichtung 52 fällt. Beim Bewegen der Positioniereinheit 42 von der Entformposition in die Spritzposition wird die Positionierhülse 48 relativ zur Aufnahmeeinrichtung 52 verschoben, wobei die Positionierhülse 48 dann das in der Aufnahmeeinrichtung angeordnete Einlegeteil 32 im Bereich seines jeweiligen Schafts 44 umschließt.

Bei der hier gezeigten Ausführungsform der Positioniereinheit 42 umfasst die Aufnahmeeinrichtung 52 zwei verschwenkbare Backen 54, die durch die Relativbewegung der Positionierhülse 48 zur Aufnahmeeinrichtung 52 von einer geschlossenen Stellung, in der die Backen 54 ein Herausbewegen des Einlegeteils 32 sperren, in eine hier gezeigte offene Stellung verschwenkbar sind, in der die Positionierhülse 48 mitsamt dem Einlegeteil 32 durch die geöffneten Backen 54 in Richtung des Formeinsatzes 28 hindurchtauchen kann.

Eine Führungseinheit 56 dient zur Lagerung der Backen 54 und der Positionierhülse 48. Die Positionierhülse 48 kann gemäß der vorliegenden Darstellung nach links durch die Führungseinheit 56 hindurchgeschoben werden. Die Positionierhülse 48 weist einen Vorsprung 58 auf, der bei der Relativbewegung der Positionierhülse 48 zu den Backen 54 eine konische Engstelle 60 zwischen den beiden Backen 54 entlanggleitet und diese dadurch von der geschlossenen Stellung in die hier geöffnete Stellung verschwenkt. Die Aufnahmeeinrichtung 52 weist mehrere Rastelemente 62 im Bereich der Führungseinheit 56 auf, die dazu ausgelegt sind, die Backen 54 in ihrer hier gezeigten geöffneten Stellung zu fixieren. Bei den Rastelementen 62 kann es sich beispielsweise um Kugelrasten handeln. Andere Rastelemente 62 sind aber auch möglich. Im Bereich der Backen 54 können noch Sensoren 64 vorgesehen sein, die zu einer hier nicht näher gezeigten Sensorik der Werkzeughälfte 12 gehören können. Mittels dieser Sensoren 64 ist es möglich, das Vorhandensein des jeweiligen Einlegeteils 32 zwischen den Backen 54 zu detektieren.

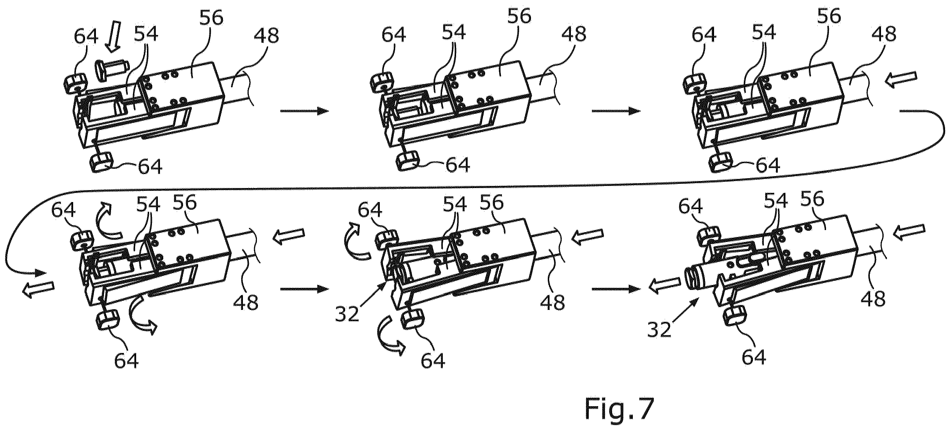

In Fig. 7 ist anhand von sechs Abbildungen eine Relativbewegung der Positionierhülse 48 zu den Backen 54 dargestellt, in Folge dessen die Backen 54 nach außen geschwenkt werden. In der Abbildung links oben ist dargestellt, wie eines der Einlegeteile 32 in den Aufnahmebereich 40 fällt, welcher von den Backen 54 seitlich, stirnseitig und nach unten begrenzt wird, da die Backen 54 sich in ihrer geschlossenen Stellung befinden. Mittels der Sensoren 64 kann dann detektiert werden, sobald das betreffende Einlegeteil 32 im Aufnahmebereich 40 angelangt ist.

Anschließend wird die Positionierhülse 48 zwischen die Backen 54 bewegt, wodurch sich die Positionierhülse 48 mit ihrer stirnseitigen Aussparung über den Schaft 44 des mittels der Backen 54 aufgenommenen Einlegeteils 32 stülpt. Die Backen 54 bleiben dabei zunächst geschlossen, sodass diese verhindern, dass das Einlegeteil 32 von der Positionierhülse 48 weggeschoben wird. Nachdem sich die Positionierhülse 48 zu einem großen Teil oder vollständig über den Schaft 44 des Einlegeteils 32 gestülpt hat, gelangt der Vorsprung 58 der Positionierhülse 48 zwischen die hier nicht erkennbare konische Engstelle 60 zwischen den Backen 54 (siehe Fig. 6), wodurch die Backen 54 bei weiterer Bewegung der Positionierhülse 48 auseinandergeschwenkt werden.

Das Auseinanderschwenken der Backen 54 ist in der unteren Bildabfolge in Fig. 7 gezeigt. Beim Bewegen der Positionierhülse 48 zwischen die Backen 54 wird also zunächst der hier nicht näher bezeichnete Schaft 44 des betreffenden Einlegeteils 32 stirnseitig von der Positionierhülse 48 umschlossen. Die geschlossenen Backen 54 verhindern dabei, dass das Einlegeteil 32 aus dem Aufnahmebereich 40 gelangen kann. Spätestens wenn der Schaft 44 vollständig und zuverlässig von der Positionierhülse 48 umschlossen wurde, werden die Backen 54 so weit auseinandergeschwenkt, bis sie ihre besagte geöffnete Stellung erreicht haben, in der die Backen 54 so weit auseinander bewegt worden sind, dass die Positionierhülse 48 mitsamt dem aufgenommenen Einlegeteil 32 durch die Backen 54 hindurchtauchen kann. Durch entsprechendes Weiterbewegen der Positionierhülse 48 kann schließlich das Einlegeteil 32 durch den Formeinsatz 28 (siehe Fig. 5) hindurchbewegt und im Bereich der Kavität 30 (siehe Fig. 2) positioniert werden. Nachdem die beiden Werkzeughälften 12, 14 geschlossen worden sind, kann das Einlegeteil 32 mit Kunststoff umspritzt werden.

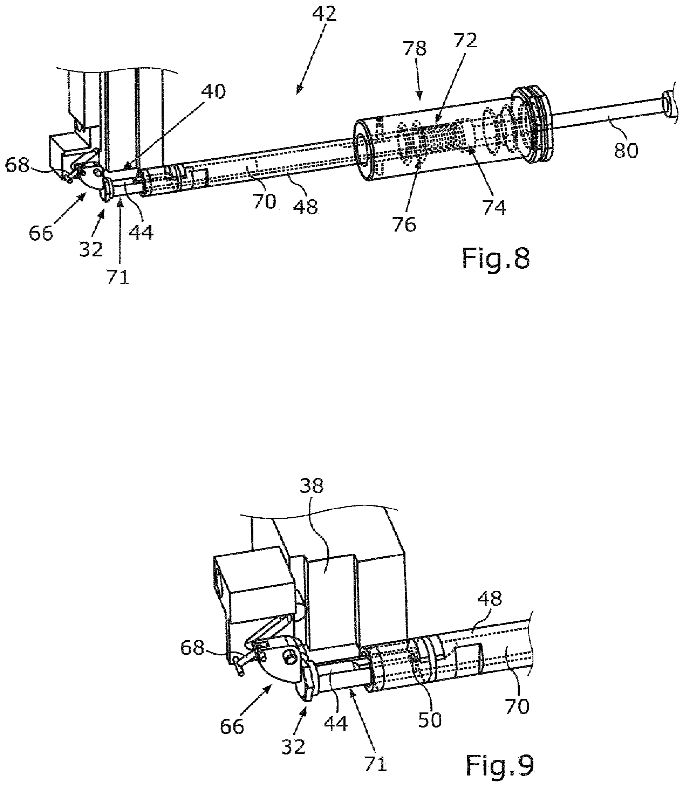

In Fig. 8 ist eine zweite Ausführungsform der Positioniereinheit 42 in einer seitlichen Perspektivansicht gezeigt. Zudem ist eine erste Ausführungsform einer Fixiereinheit 66 gezeigt, die zwischen einer hier gezeigten Fixierstellung und Freigabestellung verschwenkt werden kann. Die Fixiereinheit 66 ragt in ihrer Fixierstellung so weit in den Beförderungskanal 36 (siehe Fig. 5) hinein, dass diese eine Bewegung des im Aufnahmebereich 40 angeordneten Einlegeteils 32 in Richtung des Formeinsatzes 28 blockiert. In der Freigabestellung ist die Fixiereinheit 66 so weit aus dem Beförderungskanal 36 herausgeschwenkt, dass diese eine Bewegung der Positionierhülse 48 mitsamt dem durch diese umschlossenen Schaft 44 des Einlegeteils 32 in Richtung des Formeinsatzes 28 freigibt. Eine Rückstellfeder 68 übt eine Rückstellkraft in Richtung der hier gezeigten Fixierstellung auf die Fixiereinheit 66 aus. Wird also ansonsten keine weitere Kraft auf die Fixiereinheit 66 ausgeübt, so sorgt die Rückstellfeder 68 dafür, dass die Fixiereinheit 66 ihre hier gezeigte Fixierstellung einnimmt.

Eine Aufnahmehülse 70, die in einem vorderen Bereich einen schalenförmigen Aufnahmeabschnitt 71 aufweist, ist in axialer Richtung relativbeweglich zur Positionierhülse 48 gelagert. Der schalenförmige Aufnahmeabschnitt 71 der Aufnahmehülse 70 kann dabei zwischen einer aus der Positionierhülse 48 herausragenden Aufnahmestellung, wie hier gezeigt, und einer in der Positionierhülse 48 versenkten Übergabestellung verstellt werden. In der Entformposition der Positioniereinheit 42, wie vorliegend dargestellt, ist der Aufnahmeabschnitt 71 der Aufnahmehülse 70 in seiner Aufnahmestellung im Aufnahmebereich 40 des hier nicht näher bezeichneten Beförderungskanals 36 der Werkzeughälfte 12 angeordnet. Die jeweiligen durch den Zuführkanal 38 schwerkraftbeding nach unten fallenden Einlegeteile 32 werden also von dem schalenförmigen Aufnahmeabschnitt 71 aufgefangen.

Eine Einrückfeder 72 ist zwischen einem verdickten Ende 74 der Aufnahmehülse 70 und einem Anschlag 76 einer Federhülse 78 angeordnet. Die Positionierhülse 48 ist so mit der Federhülse 78 verbunden, dass die Positionierhülse 48 nicht in axialer Richtung zur Federhülse 78 verschoben werden kann. Ein Ausrückstift 80 kann in die Federhülse 78 eintauchen und gegen das verdickte Ende 74 der Aufnahmehülse 70 drücken. Der Ausrückstift 80 ist fest mit der Werkzeughälfte 12 verbunden, kann also in axialer Richtung nicht bewegt werden. Je nachdem, wie die Positioniereinheit 48 in der Werkzeughälfte 12 angeordnet wurde, ragt der Ausrückstift 80 weiter oder weniger weit in die Federhülse 78 hinein oder auch gar nicht in die Federhülse 78 hinein. Wenn mittels des Ausrückstifts 80 keine Kraft auf das verdickte Ende 74 ausgeübt wird, dann sorgt die Einrückfeder 72 dafür, dass der Aufnahmeabschnitt 71 in seine versenkte Übergabestellung bewegt wird. Der Abstand in axialer Richtung zwischen dem Anschlag 76 und dem verdickten Ende 74 ist abstimmt auf die Einrückfeder 72 so gewählt, dass diese unter entsprechender Ausdehnung die Aufnahmehülse 70 so weit gegenüber der Positionierhülse 48 verschieben kann, dass der Aufnahmeabschnitt 71 in seine versenkte Übergabestellung bewegt wird.

In Fig. 9 ist der vordere Teil der Positionierhülse 48 in einer vergrößerten Perspektivansicht gezeigt. Vorliegend ist nochmal gut die verschwenkbare Fixiereinheit 66 zu erkennen. Vorliegend befindet sich der Aufnahmeabschnitt 71 der Aufnahmehülse 70 wieder in einer ausgefahrenen bzw. herausragenden Aufnahmestellung, wodurch das durch den Zuführkanal 38 gefallene Einlegeteil 32 zuverlässig im Bereich seines Schafts 44 aufgefangen und aufgenommen werden konnte.

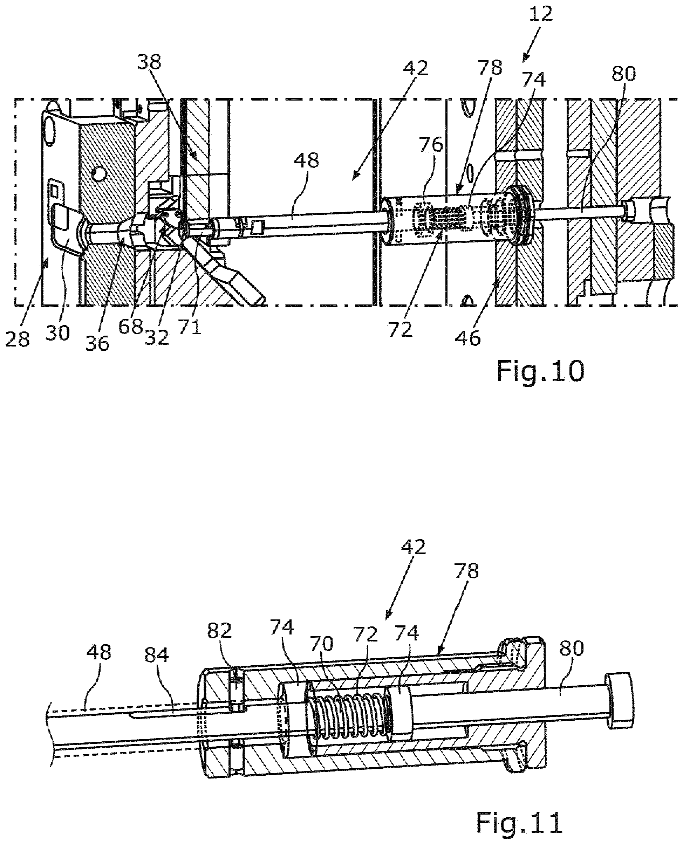

In Fig. 10 ist ein Teil der Werkzeughälfte 12 in einer teilweise geschnittenen Ansicht gezeigt, wobei sich die zweite Ausführungsform der Positioniereinheit 42 in ihrer Entformposition befindet. Vorliegend kann man gut erkennen, dass der Ausrückstift 80 axial unbeweglich in der Werkzeughälfte 12 fixiert ist. Der Ausrückstift 80 ist in die Federhülse 76 eingetaucht und hat dabei das Ende 74 der Aufnahmehülse 70 entgegen der von der Einrückfeder 72 ausgeübten Federkraft so weit verschoben, dass der schalenförmige Aufnahmeabschnitt 71 der Aufnahmehülse 70 in seiner herausragenden Aufnahmestellung angeordnet wurde.

Die Positioniereinheit 42 ist mit der Federhülse 78 festverbunden, welche wiederum mit dem Kernzug 46 verbunden ist. Eine Bewegung des Kernzugs 46 resultiert also in einer entsprechenden Bewegung der Federhülse 78 und der Positioniereinheit 42. Je weiter sich der Kernzug 46 nach rechts bewegt, desto weiter taucht der Ausrückstift 80 in die Federhülse 78 ein und desto weiter wird der Aufnahmeabschnitt 71 der Aufnahmehülse 70 herausbewegt und umgekehrt. Je weiter also der Kernzug 46 nach links, also in Richtung der Kavität 30, bewegt wird, desto weniger weit taucht der Ausrückstift 80 in die Federhülse 78 ein und drückt den Aufnahmeabschnitt 71 umso weniger weit auf der Positionierhülse 48 heraus.

In Fig. 11 ist eine teilweise geschnittene Detailansicht der zweiten Ausführungsform der Positioniereinheit 42 gezeigt, wobei diese sich, wie in Fig. 10, in ihrer Entformposition befindet. Die Einrückfeder 72 befindet sich also wieder in ihrer gestauchten und somit gespannten Stellung zwischen dem verdickten Ende 74 der Aufnahmehülse 70 und dem Anschlag 74 der Federhülse 78. Hier kann man gut erkennen, dass die als Schraubenfeder ausgebildete Einrückfeder 72 sich um den Teil der Aufnahmehülse 70 windet, der momentan zwischen dem Anschlag 74 und dem Ende 74 angeordnet ist. Ein Stift 82 erstreckt sich durch eine Durchgangsöffnung 84 der Positionierhülse 48 und eine hier nicht erkennbare Durchgangsöffnung der Aufnahmehülse 70. Dadurch wird eine Verdrehsicherung erzielt, sodass sich die Aufnahmehülse 70 und die Positionierhülse 48 nicht um ihre jeweiligen Längsachsen zueinander verdrehen können. Infolgedessen kann sichergestellt werden, dass der hier nicht erkennbare Aufnahmeabschnitt 71 der Aufnahmehülse sich immer in seiner bestimmungsgemäßen Ausrichtung bleibt, mit seiner Öffnung also immer nach oben zeigt.

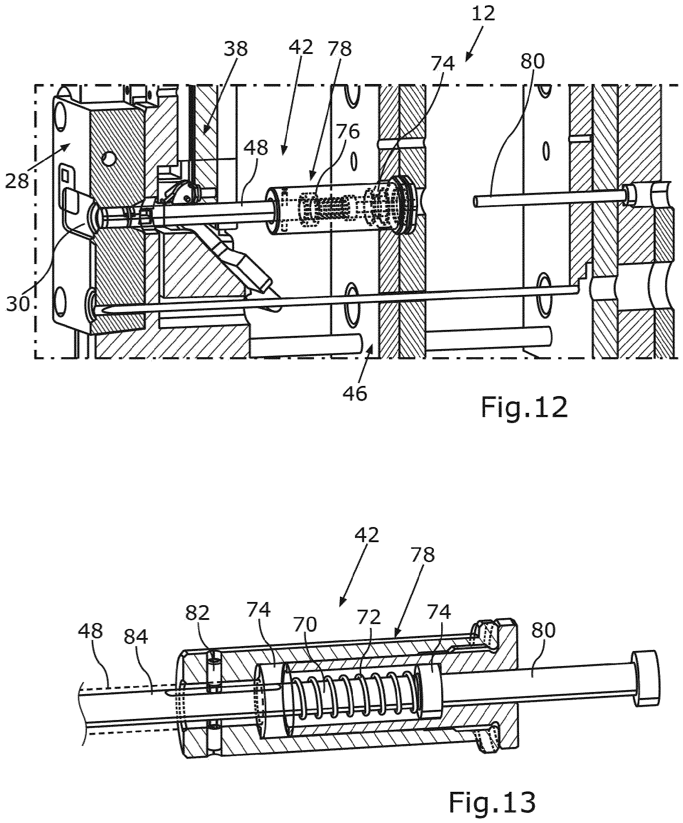

In Fig. 12 ist ein Teil der Werkzeughälfte 12 in einer teilweise geschnittenen Ansicht gezeigt, wobei sich die zweite Ausführungsform der Positioniereinheit 42 in ihrer Spritzposition befindet. Der Kernzug 46 wurde nun so weit nach links, also in Richtung der Kavität 30 bewegt, dass das hier nicht erkennbar und mittels der Positionierhülse 48 aufgenommene Einlegeteil 32 im Bereich der Kavität 30 angeordnet wurde. Wie zu erkennen, taucht nun der Ausrückstift 80 gar nicht mehr in die Federhülse 78 ein und übt somit auch keine Kraft mehr auf das Ende 74 der Aufnahmehülse 70 aus. Infolgedessen konnte sich die zuvor noch gestauchte und entsprechend vorgespannte Einrückfeder 72 entspannen. Dadurch wurde das Ende 74 der Aufnahmehülse 70 entsprechend weit vom Anschlag 74 nach rechts geschoben, folglich auch die Aufnahmehülse 70 entsprechend in axialer Richtung gegenüber der Positionierhülse 48 verschoben. Der hier nicht erkennbare Aufnahmeabschnitt 71 der Aufnahmehülse 70 wurde dadurch in seine versenkte Übergabestellung bewegt.

Die Positioniereinheit 42 und der Ausrückstift 80 können insbesondere so aufeinander abgestimmt sein, dass das Einfahren des Aufnahmeabschnitts 71 dann beginnt, wenn die Positioniereinheit 42 von ihrer in Fig. 10 gezeigten Entformposition nach links, also in Richtung der Kavität 30, in ihre Spritzposition bewegt wird. Nachdem das betreffende Einlegeteil 32 also mittels des Aufnahmeabschnitts 71 aufgenommen wurde, kann der Kernzug 46 also in Richtung der Kavität 30 verschoben werden. Mit der Verschiebung bewegt sich der Ausrückstift 80 aus der Federhülse 78, da diese in Richtung der Kavität 30 bewegt wird. Entsprechend drückt die Einrückfeder 72 die Aufnahmehülse 70 nach rechts, wodurch der Aufnahmeabschnitt 71 bei entsprechender weiterer Bewegung des Kernzugs 46 in Richtung der Kavität 30 immer weiter in die Positionierhülse 48 eingezogen wird.

In Fig. 13 ist eine teilweise geschnittene Detailansicht der zweiten Ausführungsform der Positioniereinheit 42 gezeigt, wobei diese sich zwischen der Entformposition und Spritzposition befindet. Vorliegend kann man im Vergleich mit Fig. 11 gut erkennen, wie sich die Ausrückfeder 72 entspannen und entsprechend längen konnte, da der Ausrückstift 80 nicht mehr so weit wie in der Entformposition in die Federhülse 78 hineinragt.

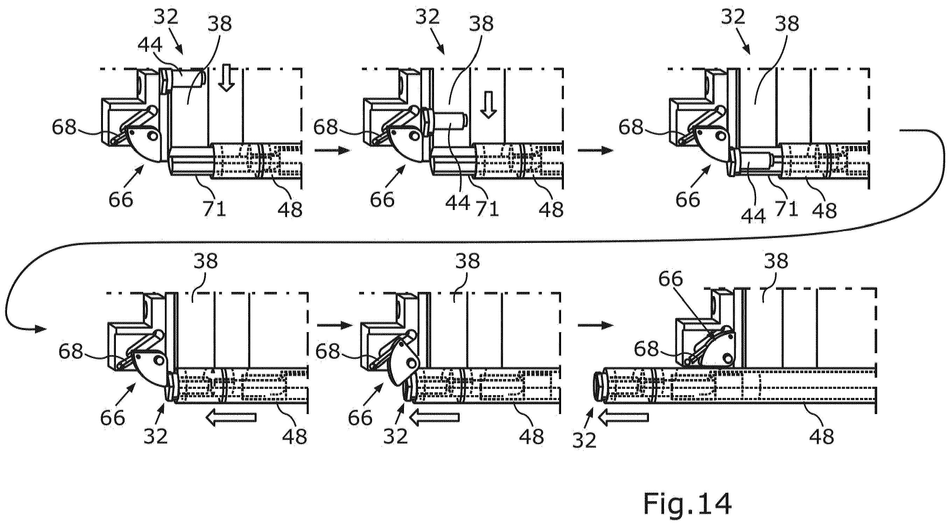

In Fig. 14 ist der Vorgang des Aufnehmens des Einlegeteils 32 und des Verschwenkens der ersten Ausführungsform der Fixiereinheit 66 anhand einer Bildabfolge dargestellt. Hier kann man nochmals gut erkennen, wie eines der Einlegeteile 32 durch den Zuführkanal 38 in den hier nicht näher bezeichneten Aufnahmebereich 40 des ebenfalls nicht bezeichneten Beförderungskanals 36 gelangt. Die Positioniereinheit 42 befindet sich in ihrer Entformposition, in der der schalenförmige Aufnahmeabschnitt 71 der Aufnahmehülse 70 unterhalb von dem Zuführkanal 38 angeordnet ist und aus der Positionierhülse 48 herausragt.

Dadurch fällt das Einlegeteil 32 mit seinem Schaft 44 in den Aufnahmeabschnitt 71 der Aufnahmehülse 70. Nachdem detektiert wurde, dass das Einlegeteil 32 im Aufnahmeabschnitt 71 der Aufnahmehülse 70 angekommen ist, wird die Positioniereinheit 42 gemäß der vorliegenden Darstellung weiter nach links bewegt. In Folge dessen wird die Aufnahmehülse 70 durch das bereits beschriebene Zusammenspiel zwischen dem Ausrückstift 80 und der Ausrückfeder eingezogen und der Aufnahmeabschnitt 71 gelangt bei entsprechend weiter Verschiebung der Positioniereinheit 42 in seine versenkte Übergabestellung.

Dadurch umschließt die Positionierhülse 48 irgendwann den Schaft 44 des betreffenden Einlegeteils 32, wobei der Magnet 50 das Einlegeteil 32 in dieser Position festhält. Wird dann die Positioniereinheit 42 gemäß der vorliegenden Darstellung weiter nach links, also in Richtung des Formeinsatzes 28 bewegt, so wird die Fixiereinheit 66 nach oben weggeschwenkt und gibt den Weg für die Positionierhülse 48 mitsamt dem aufgenommenen Einlegeteil 32 frei. Die Positioniereinheit 42 wird also mit einer solchen Kraft nach links bewegt, dass die Kraft der Rückstellfeder 68 überwunden wird, infolgedessen die Fixiereinheit 66 nach oben weggeschwenkt wird und damit den Weg nach links für die Positionierhülse 48 freigibt.

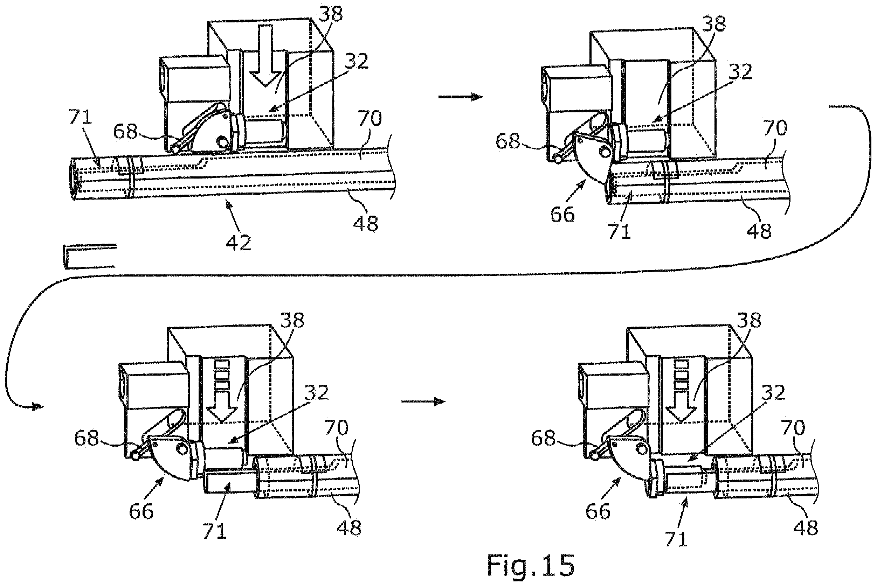

In Fig. 15 ist eine Abfolge von Abbildungen gezeigt, in denen Zusammenspiel zwischen der zweiten Ausführungsform der Positioniereinheit 42 und der ersten Ausführungsform der Fixiereinheit 66 gemäß einer weiteren Verfahrensvariante dargestellt ist. In der oberen linken Abbildung ist die Positioniereinheit 42 so weit in Richtung der Kavität 30 bewegt worden, dass der Aufnahmeabschnitt 71 sich links vom Zuführkanal 38 befindet und in seiner eingefahrenen Stellung angeordnet ist. Eines der Einlegeteile 32 wurde vereinzelt und ist durch den Zuführkanal 38 bereits heruntergefallen und kommt auf der Positionierhülse 48 zum liegen. Danach wird die Positioniereinheit 42 in ihre Entformposition bewegt, gemäß der vorliegenden Darstellung also nach rechts. Während der vordere Teil der Positionierhülse 48 dabei die Fixiereinheit 66 passiert, klappt diese nach unten in ihre Fixierstellung. Wenn die Fixierstellung der Fixiereinheit 66 erreicht wurde, hat der Aufnahmeabschnitt 71 seine hervorstehende bzw. herausragende Aufnahmestellung eingenommen. Das Einlegeteil 32 fällt dann noch ein kleines Stück herunter in den Aufnahmeabschnitt 71.

Der Vorteil bei dieser Vorgehendweise besteht darin, dass das betreffende Einlegeteil 32 nicht direkt durch den Zuführkanal 38 im Aufnahmeabschnitt 71 landet. Der Fall der Einlegeteils 32 wird durch die beschriebene Anordnung der Positioniereinheit 42 zunächst gestoppt. Erst in einem nachgelagerten Schritt fällt das Einlegeteil 32 nur noch eine sehr geringe Fallhöhe in den Aufnahmeabschnitt 71 und somit mit einer sehr geringen Geschwindigkeit. Dadurch kann eine zuverlässige Aufnahme des Einlegeteils 32 sichergestellt werden, ohne dass die Gefahr besteht, dass das Einlegeteil 32 z.B. wieder aus dem Aufnahmeabschnitt 71 springt und in einer ungünstigen Lage zum liegen kommt, in der es sich beispielsweise verkanten könnte.

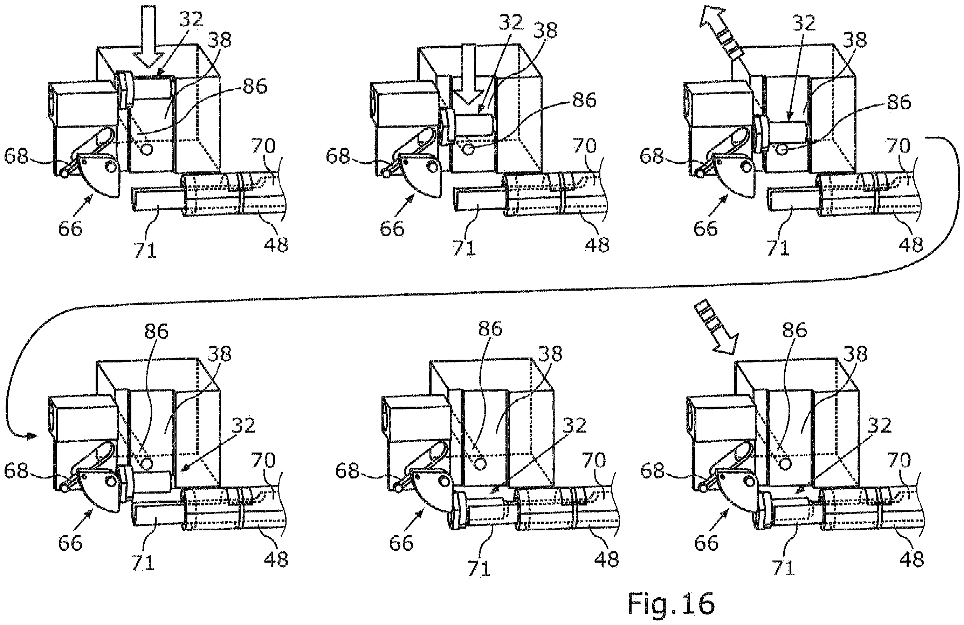

In Fig. 16 ist eine Abfolge von Abbildungen gezeigt, in denen Zusammenspiel zwischen der zweiten Ausführungsform der Positioniereinheit 42 und der ersten Ausführungsform der Fixiereinheit 66 gemäß einer weiteren Verfahrensvariante dargestellt ist. In dem hier gezeigten Fall wird das betreffende Einlegeteil 32 vereinzelt und durch den Zuführkanal 38 fallengelassen, wenn sich die Positioniereinheit 42 in der Entformposition befindet. Der Aufnahmeabschnitt 71 ist also ausgefahren und befindet sich unterhalb vom Zuführkanal 38.

Im vorliegend gezeigten Fall weist die Werkzeughälfte 12 einen Sperrstift 86 auf, der zwischen einer Sperrstellung und einer Freigabestellung bewegbar ist. In der Sperrstellung wird das durch den Zuführkanal 38 herunterfallende Einlegeteil 32 vom Sperrstift 86 darin gehindert, in den Aufnahmebereich 40 des hier nicht näher bezeichneten Beförderungskanals 36 zu gelangen. In der Freigabestellung kann das durch den Zuführkanal 38 herunterfallende Einlegeteil 32 den Sperrstift 86 passieren und in den Aufnahmebereich 40 des Beförderungskanals 36 gelangen kann.

Bevor eines der Einlegeteile 32 vereinzelt und in den Zuführkanal 38 fallengelassen wird, wird der Sperrstift 86 in seine Sperrstellung bewegt. In der Sperrstellung ragt der Sperrstift 86 so in den Zuführkanal 38 hinein, dass das Einlegeteil 32 den Sperrstift 86 nicht passieren kann. Das Einlegeteil 32 bleibt also zunächst auf dem Sperrstift 86 liegen. Die kann z.B. mittels einer Sensorik detektiert werden. Danach erst wird der Sperrstift 86 in seine Freigabestellung bewegt und gibt das Einlegteil 32 frei, das dann erst ungehindert in den Aufnahmeabschnitt 71 fallen kann. Danach wird der Sperrstift 86 wieder in seine Sperrstellung bewegt. Auch bei dieser Vorgehensweise fällt das Einlegeteil 32 nur mit einer sehr geringen Fallhöhe in den Aufnahmeabschnitt 71 und somit mit einer sehr geringen Geschwindigkeit.

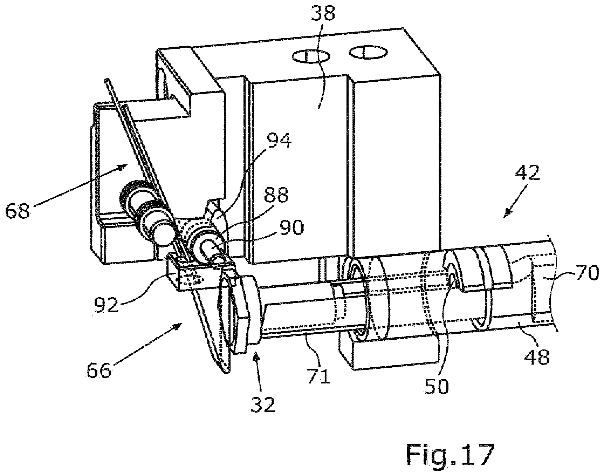

In Fig. 17 ist eine perspektivische Detailansicht eines vorderen Teils der zweiten Ausführungsform der Positioniereinheit 42 und einer zweiten Ausführungsform der Fixiereinheit 66 gezeigt. Die Fixiereinheit 66 wird von einer als Schenkelfeder ausgebildeten Rückstellfeder 68 mit einer Rückstellkraft in Richtung der hier gezeigten Fixierstellung beaufschlagt. Abweichend von der ersten Ausführungsform ist die Fixiereinheit 66 mittels eines Kugellagers 88 verschwenkbar gelagert. Da Kugellager 88 liegt außenseitig an einer nicht näher bezeichneten Öffnung der Fixiereinheit 66 befestigt. Innenseitig ist das Kugellager 88 mit einem Passstift 90 verbunden, der an zwei Lagern 92, von denen nur eines zu sehen ist, drehfest angebracht ist. Die Fixiereinheit 66 weist zudem eine Sperrnase 94 auf, auf deren Funktionsweise nachfolgend noch näher eingegangen wird.

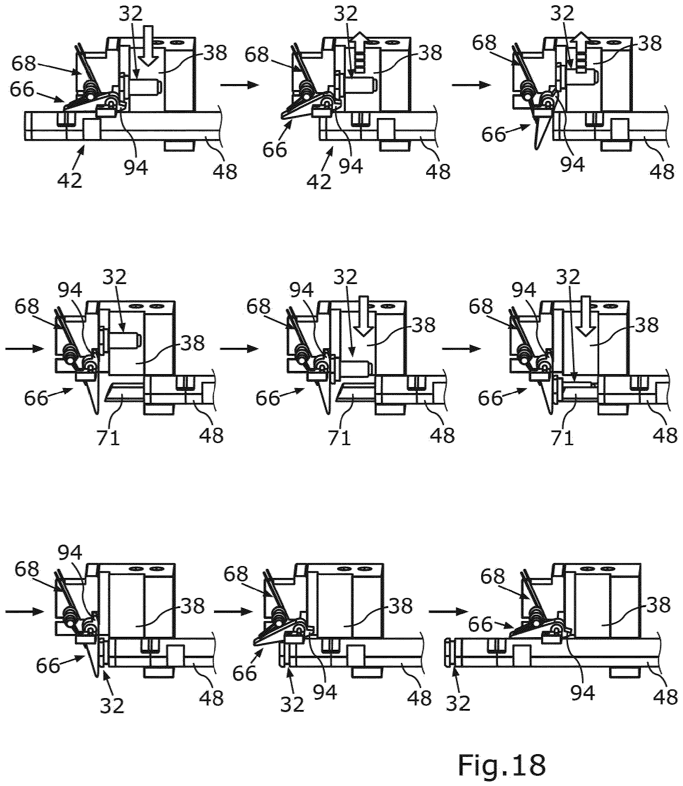

In Fig. 18 ist eine Abfolge von Abbildungen gezeigt, in denen Zusammenspiel zwischen der zweiten Ausführungsform der Positioniereinheit 42 und der zweiten Ausführungsform der Fixiereinheit 66 dargestellt ist. In der oberen linken Abbildung ist die Fixiereinheit 66 in ihrer Freigabestellung angeordnet, da diese durch eine entsprechende Bewegung der Positioniereinheit 42 nach oben geschwenkt wurde. In der Freigabestellung der Fixiereinheit 66 ragt die Sperrnase 94 so weit in den Zuführkanal 38 ragt, dass das durch den Zuführkanal 38 herunterfallende Einlegeteil 32 von der Sperrnase 94 daran gehindert wird, in den Aufnahmebereich 40 des hier nicht näher bezeichneten Beförderungskanals 36 zu gelangen.

Bevor die jeweiligen Einlegeteile 32 vereinzelt und durch den Zuführkanal 38 fallengelassen werden, wird die Positioniereinheit 42 so angeordnet, dass diese die Fixiereinheit 66 in ihre Freigabestellung geschwenkt hat und die Sperrnase 94 in den Zuführkanal 38 ragt. Erst dann wird das jeweilige Einlegeteil 32 in den Zuführkanal 38 fallengelassen. Das Einlegeteil 32 kann die Sperrnase 94 nicht passieren und bleibt durch diese gestoppt an entsprechender Stelle im Zuführkanal 38 liegen. Dies kann z.B. mittels einer Sensorik erfasst werden. Danach erst wird die Positioniereinheit 42 in ihre Entformposition bewegt, gemäß den vorliegenden Darstellungen also nach rechts.

Wenn der vordere Teil der Positionierhülse 48 die Fixiereinheit 66 passiert, klappt diese nach unten in ihre Sperrstellung. Dadurch wird die Sperrnase 94 aus dem Zuführkanal 38 geschwenkt. Mit Erreichen der Freigabestellung der Fixiereinheit 66 ragt die Sperrnase 94 blockiert dieser nicht mehr das Einlegeteil 32. Während der Verschwenkbewegung des Fixiereinheit in ihre Freigabestellung wird das Einlegeteil 32 mittels der Sperrnase 94 ein wenig angehoben, und was bis die Sperrnase so weit aus dem Zuführkanal 38 herausgeschwenkt wurde, dass das Einlegeteil 32 in Richtung des zwischenzeitlich ausgefahrenen und unter dem Zuführkanal 38 positionierten Aufnahmeabschnitts 71 der Aufnahmehülse 70 fallen kann.

Nachdem das Einlegeteil 32 mittels des Aufnahmeabschnitts 71 aufgenommen wurde, kann die Positioniereinheit 42 wiederum nach links, also in Richtung ihrer Spritzposition bewegt werden. Der Aufnahmeabschnitt 71 wird in der bereits beschriebenen Weis eingefahren und die Positionierhülse 48 umschließt das Einlegeteil 32. Das Einlegeteil 32 und/oder die Positionierhülse 48 drücken bei weiterer Bewegung in Richtung der Spritzposition die Fixiereinheit 66 entgegen der von der Feder 68 ausgeübten Kraft nach oben weg.

Auch bei dieser Vorgehensweise fällt das Einlegeteil 32 nur mit einer sehr geringen Fallhöhe in den Aufnahmeabschnitt 71 und somit mit einer sehr geringen Geschwindigkeit. Denn die Sperrnase 94 unterbricht bzw. stoppt erst einmal den Fall des Einlegeteils 32. Von dort aus fällt das Einlegeteil 32 nur noch eine relativ geringe Fallhöhe in den Aufnahmeabschnitt 71 der Aufnahmehülse 70 und bleibt dort aufgrund der geringen Fallgeschwindigkeit sicher liegen.

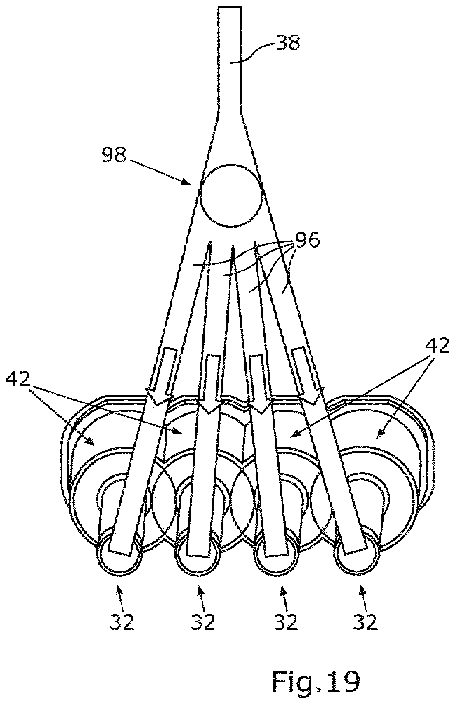

In Fig. 19 sind mehrere der nebeneinander angeordneten Positioniereinheiten 42 gemäß der zweiten Ausführungsform gezeigt. Aufgrund der in radialer Richtung kompakten Bauweise der Positioniereinheiten 42 können diese einfach dicht gepackt nebeneinander angeordnet werden. Dadurch ist es möglich, z.B. verschiedenen eng nebeneinander angeordnete Formnester der Kavität 30 mit Einlegeteilen 32 zu versorgen.

Der Zuführkanal 38 kann sich entsprechend der Anzahl und Anordnung der Positioniereinheiten 42 in jeweilige Zuführkanalabschnitte 96 verzweigen, die an unterschiedlichen Stellen in jeweiligen hier nicht näher bezeichneten Aufnahmebereichen 40 jeweiliger Beförderungskanäle 36 münden können. In einem Bereich, wo sich der Zuführkanal 96 aufweitet kann eine hier nur schematisch angedeutete Weiche 98 angeordnet sein. Diese kann die Verteilung der durch den Zuführkanal 38 herunterfallenden Einlegeteile 32 auf die jeweiligen Zuführkanalabschnitte 96 übernehmen.

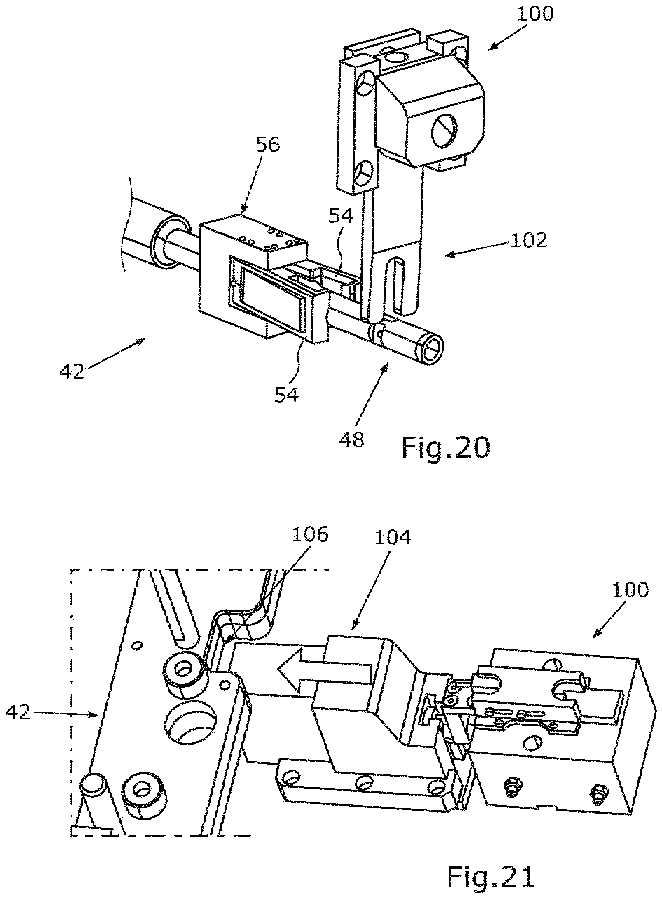

In Fig. 20 ist eine erste Ausführungsform einer Verriegelungseinheit 100 gezeigt, welche dazu ausgelegt ist, die Positioniereinheit 42 in ihrer Spritzposition zu verriegeln, in der das mittels der Positioniereinheit 42 aufgenommene Einlegeteil 32 in der Spritzgussposition angeordnet ist. Hier zwar ist die erste Ausführungsform der Positioniereinheit 42 gezeigt, die Verriegelungseinheit 73 kann aber auch für beliebige andere Ausführungsformen der Positioniereinheit 42 verwendet werden. Hier verfügt die Verriegelungseinheit 100 über ein Art Klaue102, die über die Positionierhülse 48 gestülpt beziehungsweise bewegt werden kann, um die Positionierhülse 48 und somit die Positioniereinheit 42 in ihrer Bewegung zu sperren. Dadurch kann die Positioniereinheit 42 gegenüber einem Spritzdruck verriegelt werden, wenn der Spritzgussvorgang durchgeführt wird.

In Fig. 21 ist eine zweite Ausführungsform der Verriegelungseinheit 100 gezeigt. Diese kann beispielsweise hydraulisch betätigt werden, sodass die Verriegelungseinheit 100 über eine Art seitliche Kulisse 104 beispielsweise unter einen plattenförmigen Bereich der Positioniereinheit 42 gelangen und diese dadurch verriegeln kann. Dadurch kann die Positioniereinheit 42 wiederum gegenüber einem Spritzdruck verriegelt werden, wenn der Spritzgussvorgang durchgeführt wird. Eine Aussparung 106 kann vorgesehen sein, damit die Kulisse 104 keinen allzu großen Weg zwischen einer die Positioniereinheit 42 verriegelnden und einer die Positioniereinheit 42 freigebenden Stellung zurücklegen muss.

In Fig. 13 ist die Werkzeughälfte 12 in einer teilweise geschnittenen Perspektivansicht gezeigt. Das Einlegeteil 32 wurde gerade mittels der Positioniereinheit 42 in der Spritzgussposition angeordnet. Zwar ist hier die zweite Ausführungsform der Positioniereinheit 42 gezeigt, die nachfolgenden Erläuterungen gelten auch für andere Ausführungsformen der Positioniereinheit 42. Der nicht näher bezeichnete Schraubenkopf des Einlegeteils 32 wurde im Bereich der Kavität 30 angeordnet, der Schaft 44 ist außerhalb von der Kavität 30 im Inneren der Werkzeughälfte 12 angeordnet, da der Schaft 44 weiterhin von der Positionierhülse 48 umschlossen ist.

Die beiden Werkzeughälften 12, 14, wobei letztere hier nicht zu sehen ist, wurden bereits geschlossen. Nach dem Schließen der Werkzeughälften 12, 14 wird die Kavität 30 des Formeinsatzes 28 mit einem Kunststoff 108 befüllt, in Folge dessen das in der Spritzgussposition angeordnete Einlegeteil 32 von dem Kunststoff 108 teilweise umspritzt wird. Dadurch wird das besagte Spritzgussteil mit dem integrierten Einlegeteil 32 hergestellt.

Die Werkzeughälfte 12 kann eine hier nicht dargestellte Steuerung aufweisen, die dazu ausgelegt ist, die Spritzgussmaschine 10 anzusteuern, um das besagte Spritzgussteil herzustellen. Die Steuerung kann sowohl die Zuführung der Einlegeteile 32 in den Zuführkanal 38 als auch die Bewegung beziehungsweise Betätigung der Positioniereinheit 42 steuern. Darüber hinaus kann die Steuerung der Werkzeughälfte 12 auch die Spritzgussmaschine 10 zum Herstellen des Spritzgussteils ansteuern, sodass die beiden Werkzeughälften 12, 14 geschlossen und anschließend der Kunststoff 108 in die Kavität 30 gespritzt wird, sodass das in der Spritzgussposition angeordnete jeweilige Einlegeteil 32 unter Ausbildung des Spritzgussteils vom Kunststoff 108 umspritzt wird.

In dem Fall ist nur eine Signalschnittstelle zwischen der Werkzeughälfte 12 und der Spritzgussmaschine 10 erforderlich. Oftmals weisen derartige Spritzgussmaschinen 10 bereits eine entsprechend geeignete Signalschnittstelle auf. Die Werkzeughälfte 12 ist somit nicht maschinengebunden und kann mit verschiedenen Spritzgussmaschinen 10 kombiniert und eingesetzt werden. Wenn die Werkzeughälfte 12 über besagte Steuerung verfügt, können die entsprechenden Spritzgussmaschinen 10 günstiger sein, da diese die Funktionalität der Steuerung der Werkzeughälfte 12 nicht abdecken können müssen.

Ein weiterer Vorteil ist, dass die Möglichkeit besteht, eine Funktionsprüfung, z.B. nach einer Wartung, oder Tests durchführen zu können, ohne dass dafür die Spritzgussmaschine 10 benötigt wird. Dadurch, dass die Steuerung das gesamte Spritzgusswerkzeug und somit auch die Werkzeughälfte 12 überwachen kann, weiß man genau, wo und was es für ein Problem oder Fehler es gegebenenfalls gibt. Dadurch vereinfacht sich auch die Bedienung und Überwachung der Spritzgussmaschine.

Es ist aber auch möglich, dass die Werkzeughälfte 12 selbst keine eigene Steuerung aufweist. In dem Fall kann beispielsweise die Spritzgussmaschine 10 eine Steuerung aufweisen. Diese kann sowohl die Zuführung der Einlegeteile 32 in den Zuführkanal 38 als auch die Bewegung beziehungsweise Betätigung der Positioniereinheit 42 steuern.

### BEZUGSZEICHENLISTE

- 10: Spritzgussmaschine
- 12: Werkzeughälfte
- 14: Werkzeughälfte
- 16: Zuführperipherie
- 18: Rütteltopf
- 20: Schlauch
- 22: Linearhandling
- 24: Förderband
- 26: Magazin
- 27: Schlauchfixierung
- 28: Formeinsatz
- 29: Abdeckplatte
- 30: Kavität
- 31: Abstimmstift
- 32: bolzenförmiges Einlegeteil
- 33: Magazinschacht
- 34: Vereinzelungsvorrichtung
- 36: Beförderungskanal
- 38: Zuführkanal
- 40: Aufnahmebereich des Beförderungskanals
- 42: Positioniereinheit
- 44: Schaft des Einlegeteils
- 46: Kernzug
- 48: Positionierhülse
- 50: Magnet
- 52: Aufnahmeeinrichtung
- 54: Backen
- 56: Führungseinheit
- 58: Vorsprung
- 60: konische Engstelle zwischen den Backen
- 62: Rastelemente
- 64: Sensoren
- 66: Fixiereinheit
- 68: Rückstellfeder
- 70: Aufnahmehülse
- 71: schalenförmiger Aufnahmeabschnitt der Aufnahmehülse
- 72: Einrückfeder
- 74: verdicktes Ende der Aufnahmehülse
- 76: Anschlag der Federhülse
- 78: Federhülse
- 80: Ausrückstift
- 82: Stift
- 84: Durchgangsöffnung
- 86: Sperrstift
- 88: Kugellager
- 90: Passstift
- 92: Lager
- 94: Sperrnase
- 96: Zuführkanalabschnitte
- 98: Weiche
- 100: Verriegelungseinheit
- 102: Klaue
- 104: seitliche Kulisse
- 106: Aussparung
- 108: Kunststoff

## Patentansprüche

1. Werkzeughälfte (12) für eine Spritzgussmaschine (10) zum Herstellen eines Spritzgussteils mit wenigstens einem bolzenartigen Einlegeteil (32), umfassend:
- einen Formbereich (28), der zumindest einen Teil einer Kavität (30) für das Spritzgussteil bildet;
- einen sich im Inneren der Werkzeughälfte (12) und durch den Formbereich (28) hindurch erstreckenden Beförderungskanal (36);
- einen zum Zuführen des Einlegeteils (32) in die Werkzeughälfte (12) ausgelegten Zuführkanal (38), der sich in vertikaler Richtung durch die Werkzeughälfte (12) erstreckt und in einen Aufnahmebereich (40) des Beförderungskanals (36) mündet;
- eine Positioniereinheit (42), die dazu ausgelegt ist, durch eine Bewegung von einer Entformposition in eine Spritzposition einen Schaft (44) des Einlegeteils (32) zu umschließen und dadurch das Einlegeteil (32) aufzunehmen, wenn dieses im Aufnahmebereich (40) des Beförderungskanals (36) angeordnet ist, und das aufgenommene Einlegeteil (32) vom Aufnahmebereich (40) bis zu einer Spritzgussposition im Bereich des Formbereichs (28) zu befördern, **dadurch gekennzeichnet, dass**
- die Werkzeughälfte (12) einen Kernzug (46) zum Bewegen der Positioniereinheit (42) zwischen der Entformposition und der Spritzposition aufweist;
- die Positioniereinheit (42) eine im Beförderungskanal (38) angeordnete und mit dem Kernzug (46) verbundene Positionierhülse (48) aufweist;
- beim Bewegen der Positioniereinheit (42) von der Entformposition in die Spritzposition die Positionierhülse (48) innerhalb des Beförderungskanals (36) in Richtung des Formbereichs (28) bewegt wird, dabei den Aufnahmebereich (40) passiert und bei im Aufnahmebereich (40) angeordnetem Einlegeteil (32) den Schaft (44) des Einlegeteils (32) umschließt sowie das Einlegeteil (32) in die Spritzgussposition befördert;
- eine Aufnahmeeinrichtung (52) in axialer Richtung relativbeweglich zur Positionierhülse (48) angeordnet ist;
- in der Entformposition der Positioniereinheit (42) die Aufnahmeeinrichtung (52) unterhalb vom Zuführkanal (38) im Aufnahmebereich (40) angeordnet ist, sodass das schwerkraftbedingt durch den Zuführkanal (38) in den Aufnahmebereich gelangende Einlegeteil (32) in die Aufnahmeeinrichtung (52) fällt;
- beim Bewegen der Positioniereinheit (42) von der Entformposition in die Spritzposition die Positionierhülse (48) relativ zur Aufnahmeeinrichtung (52) verschoben wird und den Schaft (44) des in der Aufnahmeeinrichtung (52) angeordneten Einlegeteils (32) umschließt sowie in die Spritzgussposition befördert.

2. Werkzeughälfte (12) nach Anspruch 1,
**dadurch gekennzeichnet, dass**
die Positionierhülse (48) einen Magnet (50) zum Fixieren des mittels der Positionierhülse (48) umschlossenen Schafts (44) des Einlegeteils (32) aufweist.

3. Werkzeughälfte (12) nach einem der Ansprüche 1 oder 2,
**dadurch gekennzeichnet, dass**
die Aufnahmeeinrichtung (52) zwei verschwenkbare Backen (54) aufweist, welche durch die Relativbewegung der Positionierhülse (48) zur Aufnahmeeinrichtung (52) von einer geschlossenen Stellung, in der die Backen (54) ein Herausbewegen des Einlegeteils (32) in Richtung des Formbereichs (28) aus den Backen (54) sperren, in eine offene Stellung verschwenkbar sind, in welcher die Positionierhülse (48) mitsamt dem Einlegeteil (32) durch die geöffneten Backen (54) in Richtung des Formbereichs (28) hindurchtauchen kann.

4. Werkzeughälfte (12) nach Anspruch 3,
**dadurch gekennzeichnet, dass**
die Positionierhülse (48) einen Vorsprung aufweist, der bei der Relativbewegung der Positionierhülse (48) zur Aufnahmeeinrichtung (52) eine konische Engstelle (60) zwischen den beiden Backen (54) entlangleitet und diese dadurch von der geschlossenen Stellung in die geöffnete Stellung verschwenkt.

5. Werkzeughälfte (12) nach Anspruch 3 oder 4,
**dadurch gekennzeichnet, dass**
die Aufnahmeeinrichtung (52) Rastelemente, insbesondere Kugelrasten, aufweist, welche dazu ausgelegt sind, die Backen (54) in ihrer geöffneten Stellung zu fixieren.

6. Werkzeughälfte (12) nach eine der Ansprüche 1 bis 5,
**dadurch gekennzeichnet, dass**
- die Werkzeughälfte (12) eine zwischen einer Fixierstellung und Freigabestellung verschwenkbare Fixiereinheit (66) aufweist;
- die Fixiereinheit (66) in der Fixierstellung so weit in den Beförderungskanal (36) hineinragt, dass diese eine Bewegung des im Aufnahmebereich in der Aufnahmeeinrichtung (52) angeordneten Einlegeteils (32) in Richtung des Formbereichs (28) blockiert;
- die Fixiereinheit (66) in der Freigabestellung so weit aus dem Beförderungskanal (36) herausgeschwenkt ist, dass diese eine Bewegung der Positionierhülse (48) mitsamt dem durch diese umschlossenen Schaft (44) des Einlegeteils (32) in Richtung des Formbereichs (28) freigibt.

7. Werkzeughälfte (12) nach Anspruch 6,
**dadurch gekennzeichnet, dass**
eine als Schraubenfeder oder als Schenkelfeder ausgebildete Rückstellfeder (68) eine Rückstellkraft in Richtung der Fixierstellung auf die Fixiereinheit (66) ausübt.

8. Werkzeughälfte (12) nach Anspruch 6 oder 7,
**dadurch gekennzeichnet, dass**
die Fixiereinheit (66) mittels eines Kugellagers (88) verschwenkbar gelagert ist.

9. Werkzeughälfte (12) nach einem der Ansprüche 6 bis 8
**dadurch gekennzeichnet, dass**
die Fixiereinheit (66) eine Sperrnase (94) aufweist, welche in der Freigabestellung der Fixiereinheit (66) so weit in den Zuführkanal (38) ragt, dass das durch den Zuführkanal (38) herunterfallende Einlegeteil (32) von der Sperrnase (94) daran gehindert wird, in den Aufnahmebereich (40) des Beförderungskanals (36) zu gelangen.

10. Werkzeughälfte (12) nach einem der Ansprüche 6 bis 8
**dadurch gekennzeichnet, dass**
die Werkzeughälfte (12) einen Sperrstift (86) aufweist, der zwischen einer Sperrstellung und einer Freigabestellung verschwenkbar ist, wobei in der Sperrstellung das durch den Zuführkanal (38) herunterfallende Einlegeteil (32) vom Sperrstift (86) darin gehindert wird, in den Aufnahmebereich (40) des Beförderungskanals (36) zu gelangen, und in der Freigabestellung das durch den Zuführkanal (38) herunterfallende Einlegeteil (32) den Sperrstift (86) in den Aufnahmebereich (40) des Beförderungskanals (36) passieren kann.

11. Werkzeughälfte (12) nach einem der Ansprüche 6 bis 10,
**dadurch gekennzeichnet, dass**
- die Aufnahmeeinrichtung (52) eine in axialer Richtung relativbeweglich zur Positionierhülse (48) gelagerte Aufnahmehülse (70) umfasst, deren schalenförmiger Aufnahmeabschnitt (71) zwischen einer aus der Positionierhülse (48) herausragenden Aufnahmestellung und einer in der Positionierhülse (48) versenkten Übergabestellung verstellbar ist;
- in der Entformposition der Positioniereinheit (42) ein unbeweglich an der Werkzeughälfte angeordneter Ausrückstift an einem vom schalenförmigen Aufnahmeabschnitt (71) abgewandten Ende auf die Aufnahmehülse (70) drückt und diese dadurch in ihre herausragende Aufnahmestellung zwingt, in welcher der schalenförmige Aufnahmeabschnitt (71) der Aufnahmehülse (70) im Aufnahmebereich (40) des Beförderungskanals (38) zum Auffangen des Einlegeteils (32) angeordnet ist;
- sich beim Bewegen der Positioniereinheit (42) von der Entformposition in die Spritzposition das vom schalenförmigen Aufnahmeabschnitt (71) abgewandte Ende der Aufnahmehülse (70) vom Ausrückstift entfernt und eine Einrückfeder (72) die Aufnahmehülse (70) in die versenkte Übergabestellung verstellt;
- mit Erreichen der Übergabestellung und weiterer Bewegung der Positioniereinheit (42) in Richtung der Spritzposition die Fixiereinheit (66) durch das Einlegeteil (32) und/oder die Positionierhülse (48) in die Freigabestellung verschwenkt wird.

12. Werkzeughälfte (12) nach einem der vorhergehenden Ansprüche,
**dadurch gekennzeichnet, dass**
die Werkzeughälfte (12) eine Verriegelungseinheit (100) aufweist, welche dazu ausgelegt ist, die Positioniereinheit (42) in ihrer Spritzposition zu verriegeln, in der das mittels der Positioniereinheit (42) aufgenommene Einlegeteil (32) in der Spritzgussposition angeordnet ist.

13. Verfahren zum Herstellen eines Spritzgussteils mit wenigstens einem bolzenartigen Einlegeteil (32) mittels einer Werkzeughälfte (12) nach einem der vorhergehenden Ansprüche, umfassend die Schritte:
- Zuführen des Einlegeteils (32) in den Zuführkanal (38), wonach das Einlegeteil (32) schwerkraftbedingt in den Aufnahmebereich (40) des Beförderungskanals (36) gelangt;
- Bewegen der Positioniereinheit (42) von der Entformposition bis zur Spritzposition, in Folge dessen die Positioniereinheit (42) einen Schaft (44) des im Aufnahmebereich (40) angeordneten Einlegeteils (32) umschließt und dieses aufnimmt sowie bis zur Spritzgussposition im Bereich des Formbereichs (28) befördert;
- Ansteuern einer Spritzgussmaschine (10) zum Herstellen des Spritzgussteils mittels einer Steuerung der Werkzeughälfte (12, 14), sodass ein die Werkzeughälfte (12) umfassendes Spritzgusswerkzeug der Spritzgussmaschine geschlossen, ein Kunststoff (108) in die Kavität (30) gespritzt und das in der Spritzgussposition angeordnete Einlegeteil (32) unter Ausbildung des Spritzgussteils vom Kunststoff (108) umspritzt wird.

## Claims

1. Tool half (12) for an injection moulding machine (10) for producing an injection moulded part having at least one bolt-like insert part (32), comprising:
- a mould region (28), which forms at least part of a cavity (30) for the injection moulded part;
- a transport channel (36) extending inside the tool half (12) and through the mould region (28);
- a feed channel (38), which is designed to feed the insert part (32) into the tool half (12), extends vertically through the tool half (12) and leads into a take-up region (40) of the transport channel (36) ;
- a positioning unit (42), which is designed, by virtue of a movement from a demoulding position into an injecting position, to enclose a shaft (44) of the insert part (32) and to take up the insert part (32) as a result when said insert part is arranged in the take-up region (40) of the transport channel (36), and to transport the taken-up insert part (32) from the take-up region (40) to an injection moulding position in the region of the mould region (28), **characterized in that**
- the tool half (12) has a core puller (46) for moving the positioning unit (42) between the demoulding position and the injecting position;
- the positioning unit (42) has a positioning sleeve (48) which is arranged in the transport channel (38) and is connected to the core puller (46);
- in the course of moving the positioning unit (42) from the demoulding position into the injecting position, the positioning sleeve (48) is moved within the transport channel (36) in the direction of the mould region (28), passes the take-up region (40) in the process, and, with the insert part (32) arranged in the take-up region (40), encloses the shaft (44) of the insert part (32) and transports the insert part (32) into the injection moulding position;
- a take-up device (52) is arranged so as to be relatively movable in the axial direction with respect to the positioning sleeve (48);
- in the demoulding position of the positioning unit (42), the take-up device (52) is arranged below the feed channel (38) in the take-up region (40), with the result that the insert part (32), which is caused by gravity to pass through the feed channel (38) into the take-up region, drops into the take-up device (52);
- in the course of moving the positioning unit (42) from the demoulding position into the injecting position, the positioning sleeve (48) is displaced relative to the take-up device (52) and encloses the shaft (44) of the insert part (32) arranged in the take-up device (52) and transports it into the injection moulding position.

2. Tool half (12) according to Claim 1,
**characterized in that**
the positioning sleeve (48) has a magnet (50) for fixing the shaft (44), enclosed by means of the positioning sleeve (48), of the insert part (32).

3. Tool half (12) according to either one of Claims 1 and 2,
**characterized in that**
the take-up device (52) has two pivotable jaws (54), which, by virtue of the relative movement of the positioning sleeve (48) with respect to the take-up device (52), can be pivoted from a closed position, in which the jaws (54) block the insert part (32) from moving out of the jaws (54) in the direction of the mould region (28), into an open position, in which the positioning sleeve (48) together with the insert part (32) can dip through the open jaws (54) in the direction of the mould region (28).

4. Tool half (12) according to Claim 3,
**characterized in that**
the positioning sleeve (48) has a projection, which, in the course of the relative movement of the positioning sleeve (48) with respect to the take-up device (52), slides along a conical constriction (60) between the two jaws (54) and as a result pivots said jaws from the closed position into the open position.

5. Tool half (12) according to Claim 3 or 4,
**characterized in that**
the take-up device (52) has detent elements, in particular detent balls, which are designed to fix the jaws (54) in their open position.

6. Tool half (12) according to one of Claims 1 to 5,
**characterized in that**
- the tool half (12) has a fixing unit (66) that can be pivoted between a fixing position and an enabling position;
- the fixing unit (66) in the fixing position projects into the transport channel (36) far enough that it blocks a movement of the insert part (32), arranged in the take-up region in the take-up device (52), in the direction of the mould region (28) ;
- the fixing unit (66) in the enabling position is pivoted out of the transport channel (36) far enough that it enables a movement of the positioning sleeve (48) together with the shaft (44) of the insert part (32) that it encloses in the direction of the mould region (28).

7. Tool half (12) according to Claim 6,
**characterized in that**
a return spring (68) in the form of a helical spring or leg spring exerts a return force on the fixing unit (66) in the direction of the fixing position.

8. Tool half (12) according to Claim 6 or 7,
**characterized in that**
the fixing unit (66) is pivotably mounted by means of a ball bearing (88).

9. Tool half (12) according to one of Claims 6 to 8,
**characterized in that**
the fixing unit (66) has a blocking lug (94) which, in the enabling position of the fixing unit (66), projects into the feed channel (38) far enough that the insert part (32) dropping down through the feed channel (38) is prevented by the blocking lug (94) from entering the take-up region (40) of the transport channel (36).

10. Tool half (12) according to one of Claims 6 to 8,
**characterized in that**
the tool half (12) has a blocking pin (86), which is pivotable between a blocking position and an enabling position, wherein, in the blocking position, the insert part (32) dropping down through the feed channel (38) is prevented by the blocking pin (86) from entering the take-up region (40) of the transport channel (36) and, in the enabling position, the insert part (32) dropping down through the feed channel (38) can pass the blocking pin (86) into the take-up region (40) of the transport channel (36).

11. Tool half (12) according to one of Claims 6 to 10,
**characterized in that**
- the take-up device (52) comprises a take-up sleeve (70) which is mounted so as to be relatively movable in the axial direction with respect to the positioning sleeve (48) and the bowl-shaped take-up portion (71) of which can be adjusted between a take-up position in which it projects from the positioning sleeve (48) and a transfer position in which it is recessed in the positioning sleeve (48) ;
- in the demoulding position of the positioning unit (42), a disengaging pin arranged immovably on the tool half presses against the take-up sleeve (70) at an end facing away from the bowl-shaped take-up portion (71) and forces it into its projecting take-up position as a result, in which take-up position the bowl-shaped take-up portion (71) of the take-up sleeve (70) is arranged in the take-up region (40) of the transport channel (38) for the purpose of collecting the insert part (32);
- in the event of moving the positioning unit (42) from the demoulding position into the injecting position, that end of the take-up sleeve (70) that faces away from the bowl-shaped take-up portion (71) is removed from the disengaging pin and an engaging spring (72) adjusts the take-up sleeve (70) into the recessed transfer position;
- when the transfer position is reached and the positioning unit (42) moves further in the direction of the injecting position, the fixing unit (66) is pivoted by the insert part (32) and/or the positioning sleeve (48) into the enabling position.

12. Tool half (12) according to one of the preceding claims,
**characterized in that**
the tool half (12) has a locking unit (100), which is designed to lock the positioning unit (42) in its injecting position, in which the insert part (32) taken up by means of the positioning unit (42) is arranged in the injection moulding position.

13. Method for producing an injection moulded part having at least one bolt-like insert part (32) by means of a tool half (12) according to one of the preceding claims, comprising the following steps:
- feeding the insert part (32) into the feed channel (38), after which gravity causes the insert part (32) to enter the take-up region (40) of the transport channel (36);
- moving the positioning unit (42) from the demoulding position to the injecting position, as a result of which the positioning unit (42) encloses a shaft (44) of the insert part (32) arranged in the take-up region (40), takes up said insert part and transports it to the injection moulding position in the region of the mould region (28) ;
- actuating an injection moulding machine (10) for the purpose of producing the injection moulded part by means of a controller of the tool half (12, 14), with the result that an injection moulding tool, comprising the tool half (12), of the injection moulding machine is closed, a plastics material (108) is injected into the cavity (30) and the plastics material (108) is injected around the insert part (32), arranged in the injection moulding position, so as to form the injection moulded part.

## Revendications

1. Moitié d'outil (12) pour une machine de moulage par injection (10) servant à la fabrication d'une pièce moulée par injection pourvue d'au moins une pièce d'insertion (32) de type boulon, comportant :
- une région de moule (28), qui forme au moins une partie d'une cavité (30) pour la pièce moulée par injection ;
- un canal de transport (36) s'étendant à l'intérieur de la moitié d'outil (12) et à travers la région de moule (28) ;
- un canal d'acheminement (38) conçu pour l'acheminement de la pièce d'insertion (32) dans la moitié d'outil (12), lequel canal s'étend dans la direction verticale à travers la moitié d'outil (12) et débouche dans une région de réception (40) du canal de transport (36) ;
- une unité de positionnement (42) qui est conçue pour entourer une tige (44) de la pièce d'insertion (32) par un déplacement d'une position de démoulage à une position d'injection et pour ainsi recevoir la pièce d'insertion (32), lorsque celle-ci est disposée dans la région de réception (40) du canal de transport (36), et pour transporter la pièce d'insertion (32) reçue à partir de la région de réception (40) jusqu'à une position de moulage par injection dans la zone de la région de moule (28), **caractérisée en ce que**
- la moitié d'outil (12) comprend un tire-noyau (46) pour le déplacement de l'unité de positionnement (42) entre la position de démoulage et la position d'injection ;
- l'unité de positionnement (42) comprend une douille de positionnement (48) disposée dans le canal de transport (38) et connectée au tire-noyau (46) ;
- lors du déplacement de l'unité de positionnement (42) de la position de démoulage à la position d'injection, la douille de positionnement (48) est déplacée à l'intérieur du canal de transport (36) en direction de la région de moule (28), va en l'occurrence au-delà de la région de réception (40) et, lorsque la pièce d'insertion (32) est disposée dans la région de réception (40), entoure la tige (44) de la pièce insertion (32) et transporte la pièce d'insertion (32) dans la position de moulage par injection ;
- un dispositif de réception (52) est disposé de manière mobile relativement à la douille de positionnement (48) dans la direction axiale ;
- dans la position de démoulage de l'unité de positionnement (42), le dispositif de réception (52) est disposé en dessous du canal d'acheminement (38) dans la région de réception (40), de sorte que la pièce d'insertion (32) parvenue dans la région de réception à travers le canal d'acheminement (38) sous l'effet de la force de gravité tombe dans le dispositif de réception (52) ;
- lors du déplacement de l'unité de positionnement (42) de la position de démoulage à la position d'injection, la douille de positionnement (48) est décalée par rapport au dispositif de réception (52) et entoure la tige (44) de la pièce d'insertion (32) disposée dans le dispositif de réception (52) et la transporte dans la position de moulage par injection.

2. Moitié d'outil (12) selon la revendication 1,
**caractérisée en ce que**
la douille de positionnement (48) comprend un aimant (50) pour la fixation de la tige (44) de la pièce d'insertion (32) entourée au moyen de la douille de positionnement (48) .

3. Moitié d'outil (12) selon l'une des revendications 1 ou 2,
**caractérisée en ce que**
le dispositif de réception (52) comprend deux mâchoires (54) pivotantes, lesquelles sont pivotantes, par le déplacement relatif de la douille de positionnement (48) par rapport au dispositif de réception (52), d'une position fermée, dans laquelle les mâchoires (54) bloquent une sortie de la pièce d'insertion (32) en direction de la région de moule (28) hors des mâchoires (54), à une position ouverte, dans laquelle la douille de positionnement (48) avec la pièce d'insertion (32) peut pénétrer à travers les mâchoires ouvertes (54) en direction de la région de moule (28).

4. Moitié d'outil (12) selon la revendication 3,
**caractérisée en ce que**
la douille de positionnement (48) comprend une saillie qui, lors du déplacement relatif de la douille de positionnement (48) par rapport au dispositif de réception (52), glisse le long d'un étranglement conique (60) entre les deux mâchoires (54) et fait pivoter ainsi celles-ci de la position fermée à la position ouverte.

5. Moitié d'outil (12) selon la revendication 3 ou 4,
**caractérisée en ce que**
le dispositif de réception (52) comprend des éléments d'encliquetage, en particulier des dispositifs d'encliquetage à billes, lesquels sont conçus pour fixer les mâchoires (54) dans leur position ouverte.

6. Moitié d'outil (12) selon l'une des revendications 1 à 5,
**caractérisée en ce que**
- la moitié d'outil (12) comprend une unité de fixation (66) pivotante entre une position de fixation et une position de libération ;
- l'unité de fixation (66) dans la position de fixation pénètre dans le canal de transport (36) dans une mesure telle qu'elle bloque un déplacement de la pièce d'insertion (32) disposée dans la région de réception dans le dispositif de réception (52) en direction de la région de moule (28) ;
- l'unité de fixation (66) dans la position de libération est pivotée hors du canal de transport (36) dans une mesure telle qu'elle autorise un déplacement de la douille de positionnement (48) avec la tige (44), entourée par celle-ci, de la pièce d'insertion (32) en direction de la région de moule (28).

7. Moitié d'outil (12) selon la revendication 6,
**caractérisée en ce**
**qu'**un ressort de rappel (68) réalisé sous forme de ressort hélicoïdal ou sous forme de ressort à branches exerce sur l'unité de fixation (66) une force de rappel en direction de la position de fixation.

8. Moitié d'outil (12) selon la revendication 6 ou 7,
**caractérisée en ce que**
l'unité de fixation (66) est montée pivotante au moyen d'un palier à billes (88).

9. Moitié d'outil (12) selon l'une des revendications 6 à 8,
**caractérisée en ce que**
l'unité de fixation (66) comprend un ergot de blocage (94), lequel pénètre dans le canal d'acheminement (38) dans la position de libération de l'unité de fixation (66) dans une mesure telle que la pièce d'insertion (32) tombant à travers le canal d'acheminement (38) est empêchée, par l'ergot de blocage (94), de parvenir dans la région de réception (40) du canal de transport (36).

10. Moitié d'outil (12) selon l'une des revendications 6 à 8,
**caractérisée en ce que**
la moitié d'outil (12) comprend une goupille de blocage (86), qui est pivotante entre une position de blocage et une position de libération, la pièce d'insertion (32) tombant à travers le canal d'acheminement (38) étant empêchée, par la goupille de blocage (86), de parvenir dans la région de réception (40) du canal de transport (36) dans la position de blocage, et la pièce d'insertion (32) tombant à travers le canal d'acheminement (38) pouvant aller au-delà de la goupille de blocage (86) dans la région de réception (40) du canal de transport (36) dans la position de libération.

11. Moitié d'outil (12) selon l'une des revendications 6 à 10,
**caractérisée en ce que**
- le dispositif de réception (52) comprend une douille de réception (70) montée de manière mobile relativement à la douille de positionnement (48) dans la direction axiale, douille dont la partie de réception (71) en forme de coque est déplaçable entre une position de réception dépassant hors de la douille de positionnement (48) et une position de transfert en retrait dans la douille de positionnement (48) ;
- dans la position de démoulage de l'unité de positionnement (42), une goupille de désenclenchement disposée de manière fixe sur la moitié d'outil presse sur la douille de réception (70) à une extrémité opposée à la partie de réception (71) en forme de coque et force ainsi celle-ci dans sa position de réception faisant saillie, dans laquelle la partie de réception (71) en forme de coque de la douille de réception (70) est disposée dans la région de réception (40) du canal de transport (38) pour collecter la pièce d'insertion (32) ;
- lors du déplacement de l'unité de positionnement (42) de la position de démoulage à la position d'injection, l'extrémité de la douille de réception (70) opposée à la partie de réception (71) en forme de coque s'éloigne de la goupille de désenclenchement et un ressort d'enclenchement (72) déplace la douille de réception (70) dans la position de transfert en retrait ;
- une fois la position de transfert atteinte et lors d'un déplacement supplémentaire de l'unité de positionnement (42) en direction de la position d'injection, l'unité de fixation (66) est pivotée dans la position de libération par la pièce d'insertion (32) et/ou la douille de positionnement (48).

12. Moitié d'outil (12) selon l'une des revendications précédentes,
**caractérisée en ce que**
la moitié d'outil (12) comprend une unité de verrouillage (100), laquelle est conçue pour verrouiller l'unité de positionnement (42) dans sa position d'injection, dans laquelle la pièce d'insertion (32) reçue au moyen de l'unité de positionnement (42) est disposée dans la position de moulage par injection.

13. Procédé de fabrication d'une pièce moulée par injection pourvue d'au moins une pièce d'insertion (32) de type boulon au moyen d'une moitié d'outil (12) selon l'une des revendications précédentes, comportant les étapes suivantes :
- acheminement de la pièce d'insertion (32) dans le canal d'acheminement (38), après quoi la pièce d'insertion (32) parvient dans la région de réception (40) du canal de transport (36) sous l'effet de la gravité ;
- déplacement de l'unité de positionnement (42) à partir de la position de démoulage jusqu'à la position d'injection, à la suite de quoi l'unité de positionnement (42) entoure une tige (44) de la pièce d'insertion (32) disposée dans la région de réception (40) et reçoit celle-ci et la transporte jusqu'à la position de moulage par injection dans la zone de la région de moule (28) ;
- commande d'une machine de moulage par injection (10) servant à la fabrication de la pièce moulée par injection au moyen d'une commande de la moitié d'outil (12, 14), de sorte qu'un outil de moulage par injection, comportant la moitié d'outil (12), de la machine de moulage par injection soit fermé, qu'une matière synthétique (108) soit injectée dans la cavité (30) et que la pièce d'insertion (32) disposée dans la position de moulage par injection soit surmoulée avec la matière synthétique (108) en formant la pièce moulée par injection.
